# EUROPEAN PATENT APPLICATION

(11) **EP 3 016 338 A1**
(43) Date of publication of application: **04.05.2016**
(21) Application number: 14829750.0
(22) Date of filing: 25.07.2014
(51) Int. Cl.: H04L 25/03

(54) **INFORMATION TRANSMISSION METHOD, BASE STATION, USER EQUIPMENT AND WIRELESS NETWORK CONTROLLER**

(30) Priority: 25.07.2013 CN 201310316349; 26.09.2013 CN 201310459254
(71) Applicant: Huawei Technologies Co., Ltd., Longgang District Shenzhen, Guangdong 518129 (CN)
(72) Inventor: JIAO, Shurong, Shenzhen Guangdong 518129 (CN); HUA, Meng, Shenzhen Guangdong 518129 (CN); GUO, Fangfu, Shenzhen Guangdong 518129 (CN); MA, Xueli, Shenzhen Guangdong 518129 (CN)
(74) Representative: Goddar, Heinz J.
(86) International application number: PCT/CN2014/083046
(87) International publication number: WO 2015/010652

(57) **Abstract**

Embodiments of the present invention disclose an information transmission method, including: acquiring, by a base station, ratio of energy per chip to power spectral density Ec/Ior information of a pilot channel; and delivering, by the base station, the Ec/Ior information to user equipment, so that the user equipment acquires a real-time Ec/Ior value of the pilot channel according to the Ec/Ior information. The embodiments of the present invention further disclose an information acquiring method, a base station, user equipment, and a radio network controller. With the present invention, accurate Ec/Ior information can be directly sent to UE, which helps the UE obtain an accurate real-time Ec/Ior value through calculation, and improves performance of receiving a target signal.

## Description

This application claims priority to Chinese Patent Application No. 201310316349.1, filed with the Chinese Patent Office on July, 25, 2013 and entitled "INFORMATION TRANSMISSION METHOD, BASE STATION, USER EQUIPMENT, AND RADIO NETWORK CONTROLLER", and Chinese Patent Application No. 201310459254.5, filed with the Chinese Patent Office on September, 26, 2013 and entitled "INFORMATION TRANSMISSION METHOD, BASE STATION, USER EQUIPMENT, AND RADIO NETWORK CONTROLLER", which are incorporated herein by reference in their entireties.

### TECHNICAL FIELD

The present invention relates to the field of communications technologies, and in particular, to an information transmission method, a base station, user equipment, and a radio network controller.

### BACKGROUND

Ec/Ior represents a ratio of transmit energy per chip to transmit power spectral density of a code domain or a physical channel. Because total bandwidth of a communications system is fixed, in the communications system, Ec/Ior may represent a ratio of transmit energy of a single channel to total transmit power, and transmit energy of a channel may be controlled and adjusted according to a value of the Ec/Ior. User equipment (User Equipment, UE for short) may compensate for, by estimating an Ec/Ior value, a received target signal by using a corresponding balancing algorithm, so as to improve accuracy of the received target signal. However, with continuous development of the communications technologies, there are more deployments of transmit sources. When multiple transmit sources relatively close to each other in an area transmit signals at the same time, the UE can hardly estimate an Ec/Ior value of each pilot accurately, which affects calculation of a balancing coefficient, cannot well compensate for a target signal, and as a result an accurate target signal cannot be received.

In the prior art, UE estimates an Ec/Ior value to obtain the Ec/Ior value. The UE may calculate a balancing coefficient by using a predetermined Ec/Ior value. However, in an actual communication process, the Ec/Ior value may change as a real-time service status changes, calculation of a balancing coefficient by using a predetermined Ec/Ior value has low accuracy, and as a result performance of the UE in receiving a target signal is relatively low. Alternatively, a ratio of transmit energy per chip Ec to a reduced value of entire received signal strength of the UE may be used as estimation of the Ec/Ior value. However, because in addition to a target signal of a to-be-estimated cell, the entire received signal strength further includes noise and an interference signal of another cell, signal separation is relatively difficult, and especially when scrambling code used by an interference cell is the same as scrambling code used by a to-be-estimated cell, signal separation is more difficult. Therefore, in this estimation method, a reduced value of entire received signal strength is used to replace transmit power spectral density Ior, which has a relatively large deviation, and a balancing coefficient obtained through calculation based on this still has relatively low accuracy, and as a result performance of UE in receiving a target signal is relatively low in most cases.

### SUMMARY

To resolve technical problems, embodiments of the present invention provide an information transmission method, a base station, user equipment, and a radio network controller, so that accurate Ec/Ior information can be directly sent to the UE, which helps the UE obtain through calculation an accurate real-time real-time Ec/Ior value, and improves performance of receiving a target signal.

A first aspect of the embodiments of the present invention provides a control information transmission method, including:
acquiring, by a base station, ratio of energy per chip to power spectral density Ec/Ior information of a pilot channel; and
delivering, by the base station, the Ec/Ior information to user equipment, so that the user equipment acquires a real-time Ec/Ior value of the pilot channel according to the Ec/Ior information.

In a first possible implementation manner of the first aspect, the Ec/Ior information includes an absolute real-time Ec/Ior value of the pilot channel, where the absolute real-time Ec/Ior value is an absolute value of the real-time Ec/Ior value; or
the Ec/Ior information includes an initial Ec/Ior value of the pilot channel and a relative Ec/Ior value of the pilot channel, where the initial Ec/Ior value is an absolute value, and the relative Ec/Ior value is a value of the real-time Ec/Ior value relative to the corresponding initial Ec/Ior value; or
the Ec/Ior information includes a relative Ec/Ior value of the pilot channel, where the relative Ec/Ior value is a value of the real-time Ec/Ior value relative to a corresponding initial Ec/Ior value, and the initial Ec/Ior value is configured by a radio network controller and is delivered to the user equipment; or
the Ec/Ior information includes a real-time Ec/Ior value of a primary common pilot channel and an offset value between a secondary common pilot channel and the corresponding primary common pilot channel, where the real-time Ec/Ior value of the primary common pilot channel is an absolute value or a relative value corresponding to an initial Ec/Ior value of the primary common pilot channel, and the offset value remains unchanged.

With reference to the first aspect or the first possible implementation manner of the first aspect, in a second possible implementation manner, the pilot channel includes a first-type pilot channel and/or a second-type pilot channel, where the first-type pilot channel is a downlink pilot channel between the base station and the user equipment, the second-type pilot channel is a downlink pilot channel causing interference to a signal sent by the first-type pilot channel, and the second-type pilot channel comes from the base station or an adjacent base station of the base station.

With reference to the second possible implementation manner of the first aspect, in a third possible implementation manner, if the first-type pilot channel comes from the base station and the second-type pilot channel comes from the adjacent base station of the base station, the base station establishes a data path to the adjacent base station to acquire Ec/Ior information of the second-type pilot channel; or
receives Ec/Ior information of the second-type pilot channel delivered by the radio network controller, where the Ec/Ior information of the second-type pilot channel is reported by the adjacent base station of the base station to the radio network controller.

With reference to the first or second or third possible implementation manner of the first aspect, in a fourth possible implementation manner, the delivering, by the base station, the Ec/Ior information to user equipment includes:
delivering the Ec/Ior information according to a preset period; or
when a difference between the real-time Ec/Ior value of the pilot channel and a real-time Ec/Ior value that is obtained when the Ec/Ior information is previously delivered reaches a preset difference, delivering the Ec/Ior information; or
delivering the Ec/Ior information according to a preset period, and if a difference between the real-time Ec/Ior value of the pilot channel and a real-time Ec/Ior value that is obtained when the Ec/Ior information is previously delivered reaches a preset difference within one preset period, delivering the Ec/Ior information.

A second aspect of the embodiments of the present invention provides an information acquiring method, used to acquire a ratio of energy per chip to power spectral density Ec/Ior of a pilot channel, and including:
receiving, by user equipment, Ec/Ior information of the pilot channel delivered by a base station; and
acquiring, by the user equipment, a real-time Ec/Ior value of the pilot channel according to the Ec/Ior information.

In a first possible implementation manner of the second aspect, the Ec/Ior information includes an absolute real-time Ec/Ior value of the pilot channel, where the absolute real-time Ec/Ior value is an absolute value of the real-time Ec/Ior value; or
the Ec/Ior information includes an initial Ec/Ior value of the pilot channel and a relative Ec/Ior value of the pilot channel, where the initial Ec/Ior value is an absolute value, and the relative Ec/Ior value is a value of the real-time Ec/Ior value relative to the corresponding initial Ec/Ior value; or
the Ec/Ior information includes a relative Ec/Ior value of the pilot channel, where the relative Ec/Ior value is a value of the real-time Ec/Ior value relative to a corresponding initial Ec/Ior value, and the initial Ec/Ior value is configured by a radio network controller and is delivered to the user equipment; or
the Ec/Ior information includes a real-time Ec/Ior value of a primary common pilot channel and an offset value between a secondary common pilot channel and the corresponding primary common pilot channel, where the real-time Ec/Ior value of the primary common pilot channel is an absolute value or a relative value corresponding to an initial Ec/Ior value of the primary common pilot channel, and the offset value remains unchanged.

With reference to the second aspect or the first possible implementation manner of the second aspect, in a second possible implementation manner, the acquiring, by the user equipment, a real-time Ec/Ior value of the pilot channel according to the Ec/Ior information includes:
reading the absolute real-time Ec/Ior value from the Ec/Ior information, and using the absolute real-time Ec/Ior value as the real-time Ec/Ior value; or
reading the relative Ec/Ior value and the initial Ec/Ior value from the Ec/Ior information, and adding the relative Ec/Ior value and the initial Ec/Ior value to obtain the real-time Ec/Ior value; or
reading the relative Ec/Ior value from the Ec/Ior information, receiving the initial Ec/Ior value from the radio network controller, and adding the relative Ec/Ior value and the initial Ec/Ior value to obtain the real-time Ec/Ior value; or
reading the real-time Ec/Ior value of the primary common pilot channel in the pilot channel and the offset value from the Ec/Ior information, and adding the real-time Ec/Ior value of the primary common pilot channel and the corresponding offset value to obtain a real-time Ec/Ior value of the secondary common pilot channel.

With reference to the second aspect or the first or second possible implementation manner of the second aspect, in a third possible implementation manner, the pilot channel includes a first-type pilot channel and/or a second-type pilot channel, where the first-type pilot channel is a downlink pilot channel between the base station and the user equipment, the second-type pilot channel is a downlink pilot channel causing interference to a signal sent by the first-type pilot channel, and the second-type pilot channel comes from the base station or an adjacent base station of the base station.

A third aspect of the embodiments of the present invention provides an information transmission method, including:
acquiring, by a radio network controller, ratio of energy per chip to power spectral density Ec/Ior information of a pilot channel; and
delivering, by the radio network controller, the Ec/Ior information to user equipment, so that the user equipment acquires a real-time Ec/Ior value of the pilot channel according to the Ec/Ior information.

In a first possible implementation manner of the third aspect, the Ec/Ior information includes an absolute real-time Ec/Ior value of the pilot channel, where the absolute real-time Ec/Ior value is an absolute value of the real-time Ec/Ior value; or
the Ec/Ior information includes an initial Ec/Ior value of the pilot channel and a relative Ec/Ior value of the pilot channel, where the initial Ec/Ior value is an absolute value, and the relative Ec/Ior value is a value of the real-time Ec/Ior value relative to the corresponding initial Ec/Ior value; or
the Ec/Ior information includes a relative Ec/Ior value of the pilot channel, where the relative Ec/Ior value is a value of the real-time Ec/Ior value relative to a corresponding initial Ec/Ior value, and the initial Ec/Ior value is acquired by a base station from the radio network controller and is delivered to the user equipment; or
the Ec/Ior information includes a real-time Ec/Ior value of a primary common pilot channel and an offset value between a secondary common pilot channel and the corresponding primary common pilot channel, where the real-time Ec/Ior value of the primary common pilot channel is an absolute value or a relative value corresponding to an initial Ec/Ior value of the primary common pilot channel, and the offset value remains unchanged.

With reference to the third aspect or the first possible implementation manner of the third aspect, in a second possible implementation manner, the pilot channel includes a first-type pilot channel and/or a second-type pilot channel, where the first-type pilot channel is a downlink pilot channel between the base station and the user equipment, the second-type pilot channel is a downlink pilot channel causing interference to a signal sent by the first-type pilot channel, and the second-type pilot channel comes from the base station or an adjacent base station of the base station.

With reference to the second possible implementation manner of the third aspect, in a third possible implementation manner, if the first-type pilot channel comes from the base station and the second-type pilot channel also comes from the base station, the radio network controller acquires Ec/Ior information of the first-type pilot channel and Ec/Ior information of the second-type pilot channel that are reported by the base station; or
if the first-type pilot channel comes from the base station and the second-type pilot channel comes from the adjacent base station of the base station, the radio network controller acquires Ec/Ior information of the first-type pilot channel reported by the base station, and acquires Ec/Ior information of the second-type pilot channel reported by the adjacent base station of the base station.

With reference to the first or second or third possible implementation manner of the third aspect, in a fourth possible implementation manner, the delivering, by the radio network controller, the Ec/Ior information to user equipment includes:
delivering the Ec/Ior information according to a preset period; or
when a difference between the real-time Ec/Ior value of the pilot channel and a real-time Ec/Ior value that is obtained when the Ec/Ior information is previously delivered reaches a preset difference, delivering the Ec/Ior information; or
delivering the Ec/Ior information according to a preset period, and if a difference between the real-time Ec/Ior value of the pilot channel and a real-time Ec/Ior value that is obtained when the Ec/Ior information is previously delivered reaches a preset difference within one preset period, delivering the Ec/Ior information.

A fourth aspect of the embodiments of the present invention provides a base station, including:
an acquiring unit, configured to acquire ratio of energy per chip to power spectral density Ec/Ior information of a pilot channel; and
a sending unit, configured to deliver the Ec/Ior information to user equipment, so that the user equipment acquires a real-time Ec/Ior value of the pilot channel according to the Ec/Ior information.

In a first possible implementation manner of the fourth aspect, the Ec/Ior information includes an absolute real-time Ec/Ior value of the pilot channel, where the absolute real-time Ec/Ior value is an absolute value of the real-time Ec/Ior value; or
the Ec/Ior information includes an initial Ec/Ior value of the pilot channel and a relative Ec/Ior value of the pilot channel, where the initial Ec/Ior value is an absolute value, and the relative Ec/Ior value is a value of the real-time Ec/Ior value relative to the corresponding initial Ec/Ior value; or
the Ec/Ior information includes a relative Ec/Ior value of the pilot channel, where the relative Ec/Ior value is a value of the real-time Ec/Ior value relative to a corresponding initial Ec/Ior value, and the initial Ec/Ior value is configured by a radio network controller and is delivered to the user equipment; or
the Ec/Ior information includes a real-time Ec/Ior value of a primary common pilot channel and an offset value between a secondary common pilot channel and the corresponding primary common pilot channel, where the real-time Ec/Ior value of the primary common pilot channel is an absolute value or a relative value corresponding to an initial Ec/Ior value of the primary common pilot channel, and the offset value remains unchanged.

With reference to the fourth aspect or the first possible implementation manner of the fourth aspect, in a second possible implementation manner, the pilot channel includes a first-type pilot channel and/or a second-type pilot channel, where the first-type pilot channel is a downlink pilot channel between the base station and the user equipment, the second-type pilot channel is a downlink pilot channel causing interference to a signal sent by the first-type pilot channel, and the second-type pilot channel comes from the base station or an adjacent base station of the base station.

With reference to the second possible implementation manner of the fourth aspect, in a third possible implementation manner, the base station further includes:
a data path establishment unit, configured to: if the first-type pilot channel comes from the base station and the second-type pilot channel comes from the adjacent base station of the base station, establish, by the data path establishment unit, a data path to the adjacent base station to acquire Ec/Ior information of the second-type pilot channel; or
the receiving unit receives Ec/Ior information of the second-type pilot channel delivered by the radio network controller, where the Ec/Ior information of the second-type pilot channel is reported by the adjacent base station of the base station to the radio network controller.

With reference to the first or second or third possible implementation manner of the fourth aspect, in a fourth possible implementation manner, the sending unit is specifically configured to:
deliver the Ec/Ior information according to a preset period; or
when a difference between the real-time Ec/Ior value of the pilot channel and a real-time Ec/Ior value that is obtained when the Ec/Ior information is previously delivered reaches a preset difference, deliver the Ec/Ior information; or
deliver the Ec/Ior information according to a preset period, and if a difference between the real-time Ec/Ior value of the pilot channel and a real-time Ec/Ior value that is obtained when the Ec/Ior information is previously delivered reaches a preset difference within one preset period, deliver the Ec/Ior information.

A fifth aspect of the embodiments of the present invention provides user equipment, configured to acquire a ratio of energy per chip to power spectral density Ec/Ior of a pilot channel, including:
a receiving unit, configured to receive Ec/Ior information of the pilot channel delivered by a base station; and
a calculation unit, configured to acquire a real-time Ec/Ior value of the pilot channel according to the Ec/Ior information.

In a first possible implementation manner of the fifth aspect, the Ec/Ior information includes an absolute real-time Ec/Ior value of the pilot channel, where the absolute real-time Ec/Ior value is an absolute value of the real-time Ec/Ior value; or
the Ec/Ior information includes an initial Ec/Ior value of the pilot channel and a relative Ec/Ior value of the pilot channel, where the initial Ec/Ior value is an absolute value, and the relative Ec/Ior value is a value of the real-time Ec/Ior value relative to the corresponding initial Ec/Ior value; or
the Ec/Ior information includes a relative Ec/Ior value of the pilot channel, where the relative Ec/Ior value is a value of the real-time Ec/Ior value relative to a corresponding initial Ec/Ior value, and the initial Ec/Ior value is configured by a radio network controller and is delivered to the user equipment; or
the Ec/Ior information includes a real-time Ec/Ior value of a primary common pilot channel and an offset value between a secondary common pilot channel and the corresponding primary common pilot channel, where the real-time Ec/Ior value of the primary common pilot channel is an absolute value or a relative value corresponding to an initial Ec/Ior value of the primary common pilot channel, and the offset value remains unchanged.

With reference to the first possible implementation manner of the fifth aspect, in a second possible implementation manner, the calculation unit is specifically configured to:
read the absolute real-time Ec/Ior value from the Ec/Ior information, and use the absolute real-time Ec/Ior value as the real-time Ec/Ior value; or
read the relative Ec/Ior value and the initial Ec/Ior value from the Ec/Ior information, and add the relative Ec/Ior value and the initial Ec/Ior value to obtain the real-time Ec/Ior value; or
read the relative Ec/Ior value from the Ec/Ior information, receive the initial Ec/Ior value from the radio network controller, and add the relative Ec/Ior value and the initial Ec/Ior value to obtain the real-time Ec/Ior value; or
read the real-time Ec/Ior value of the primary common pilot channel in the pilot channel and the offset value from the Ec/Ior information, and add the real-time Ec/Ior value of the primary common pilot channel and the corresponding offset value to obtain a real-time Ec/Ior value of the secondary common pilot channel.

With reference to the fifth aspect or the first or second possible implementation manner of the fifth aspect, in a third possible implementation manner, the pilot channel includes a first-type pilot channel and/or a second-type pilot channel, where the first-type pilot channel is a downlink pilot channel between the base station and the user equipment, the second-type pilot channel is a downlink pilot channel causing interference to a signal sent by the first-type pilot channel, and the second-type pilot channel comes from the base station or an adjacent base station of the base station.

A sixth aspect of the embodiments of the present invention provides a radio network controller, including:
an acquiring unit, configured to acquire ratio of energy per chip to power spectral density Ec/Ior information of a pilot channel; and
a sending unit, configured to deliver the Ec/Ior information to user equipment, so that the user equipment acquires a real-time Ec/Ior value of the pilot channel according to the Ec/Ior information.

In a first possible implementation manner of the sixth aspect, the Ec/Ior information includes an absolute real-time Ec/Ior value of the pilot channel, where the absolute real-time Ec/Ior value is an absolute value of the real-time Ec/Ior value; or
the Ec/Ior information includes an initial Ec/Ior value of the pilot channel and a relative Ec/Ior value of the pilot channel, where the initial Ec/Ior value is an absolute value, and the relative Ec/Ior value is a value of the real-time Ec/Ior value relative to the corresponding initial Ec/Ior value; or
the Ec/Ior information includes a relative Ec/Ior value of the pilot channel, where the relative Ec/Ior value is a value of the real-time Ec/Ior value relative to a corresponding initial Ec/Ior value, and the initial Ec/Ior value is acquired by a base station from the radio network controller and is delivered to the user equipment; or
the Ec/Ior information includes a real-time Ec/Ior value of a primary common pilot channel and an offset value between a secondary common pilot channel and the corresponding primary common pilot channel, where the real-time Ec/Ior value of the primary common pilot channel is an absolute value or a relative value corresponding to an initial Ec/Ior value of the primary common pilot channel, and the offset value remains unchanged.

With reference to the sixth aspect or the first possible implementation manner of the sixth aspect, in a second possible implementation manner, the pilot channel includes a first-type pilot channel and/or a second-type pilot channel, where the first-type pilot channel is a downlink pilot channel between the base station and the user equipment, the second-type pilot channel is a downlink pilot channel causing interference to a signal sent by the first-type pilot channel, and the second-type pilot channel comes from the base station or an adjacent base station of the base station.

With reference to the second possible implementation manner of the sixth aspect, in a third possible implementation manner, the acquiring unit is specifically configured to:
if the first-type pilot channel comes from the base station and the second-type pilot channel also comes from the base station, acquire Ec/Ior information of the first-type pilot channel and Ec/Ior information of the second-type pilot channel that are reported by the base station; or
if the first-type pilot channel comes from the base station and the second-type pilot channel comes from the adjacent base station of the base station, acquire Ec/Ior information of the first-type pilot channel reported by the base station, and acquire Ec/Ior information of the second-type pilot channel reported by the adjacent base station of the base station.

With reference to the first or second or third possible implementation manner of the sixth aspect, in a fourth possible implementation manner, the sending unit is specifically configured to:
deliver the Ec/Ior information according to a preset period; or
when a difference between the real-time Ec/Ior value of the pilot channel and a real-time Ec/Ior value that is obtained when the Ec/Ior information is previously delivered reaches a preset difference, deliver the Ec/Ior information; or
deliver the Ec/Ior information according to a preset period, and if a difference between the real-time Ec/Ior value of the pilot channel and a real-time Ec/Ior value that is obtained when the Ec/Ior information is previously delivered reaches a preset difference within one preset period, deliver the Ec/Ior information.

A seventh aspect of the embodiments of the present invention provides an information transmission method, including: acquiring, by a base station, power spectral density Ior information, and an energy per chip Ec value of a pilot channel; and separately delivering, by the base station, the Ec value and the Ior information to user equipment.

An eighth aspect of the embodiments of the present invention provides an information acquiring method, used to acquire a ratio of energy per chip to power spectral density Ec/Ior of a pilot channel, and including: receiving, by user equipment, power spectral density Ior information, and an energy per chip Ec value of a pilot channel that are delivered by a base station; and acquiring, by the user equipment, the Ec/Ior of the pilot channel according to the Ec value and the Ior information.

A ninth aspect of the embodiments of the present invention provides an information transmission method, including: acquiring, by a network side, pilot transmit power of a pilot channel and total transmit power information; and delivering, by the network side, the pilot transmit power and the total transmit power information to user equipment.

A tenth aspect of the embodiments of the present invention provides an information acquiring, method, used to acquire a ratio of energy per chip to power spectral density Ec/Ior of a pilot channel, and including: receiving, by user equipment, total transmit power information, and pilot transmit power of a pilot channel that are delivered by a network side; and acquiring, by the user equipment, the Ec/Ior of the pilot channel according to the pilot transmit power and the total transmit power information.

An eleventh aspect of the embodiments of the present invention provides a radio network controller, including: an acquiring unit, configured to acquire total transmit power information, and pilot transmit power of a pilot channel; and a sending unit, configured to deliver the pilot transmit power and the total transmit power information to user equipment.

A twelfth aspect of the embodiments of the present invention provides a network side device, including: a first base station and a radio network controller, where the first base station includes a first acquiring unit, configured to acquire total transmit power information; and a first sending unit, configured to deliver the total transmit power information to user equipment, where the first base station is a current serving base station of the user equipment; and the radio network controller includes a second acquiring unit, configured to acquire pilot transmit power of a pilot channel; and a second sending unit, configured to deliver the pilot transmit power to the user equipment.

A thirteenth aspect of the embodiments of the present invention provides user equipment, configured to acquire a ratio of energy per chip to power spectral density Ec/Ior of a pilot channel, and including: a receiving unit, configured to receive total transmit power information, and pilot transmit power of a pilot channel that are delivered by a network side; and a calculation unit, configured to acquire the Ec/Ior of the pilot channel according to the pilot transmit power and the total transmit power information.

Implementation of the embodiments of the present invention has the following beneficial effects:

Ec/Ior information including Ec/Ior information of a pilot channel is directly delivered to user equipment, so that the user equipment can acquire an accurate real-time Ec/Ior value of the channel from the Ec/Ior information. In this way, when the user equipment calculates a balancing coefficient, accuracy is relatively high, so that the user equipment can well compensate for, according to the accurate balancing coefficient, a data channel corresponding to the pilot channel, thereby improving performance of the user equipment in receiving a signal.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a first embodiment of an information transmission method according to the present invention;
FIG. 2 is a schematic flowchart of a second embodiment of an information transmission method according to the present invention;
FIG. 3 is a schematic flowchart of a third embodiment of an information transmission method according to the present invention;
FIG. 4 is a schematic flowchart of a first embodiment of an information acquiring method according to the present invention;
FIG. 5 is a schematic flowchart of a second embodiment of an information acquiring method according to the present invention;
FIG. 6 is a schematic flowchart of a first embodiment of another information transmission method according to the present invention;
FIG. 7 is a schematic flowchart of a second embodiment of another information transmission method according to the present invention;
FIG. 8 is a schematic flowchart of a third embodiment of another information transmission method according to the present invention;
FIG. 9 is a schematic composition diagram of a first embodiment of a base station according to the present invention;
FIG. 10 is a schematic composition diagram of a second embodiment of a base station according to the present invention;
FIG. 11 is a schematic composition diagram of user equipment according to an embodiment of the present invention;
FIG. 12 is a schematic composition diagram of a radio network controller according to an embodiment of the present invention;
FIG. 13 is a schematic diagram of signal transmission when an SFN mode coexists with an SR mode according to an embodiment of the present invention;
FIG. 14 is a schematic diagram of another information transmission method according to an embodiment of the present invention;
FIG. 15 is a schematic diagram of another information acquiring method according to an embodiment of the present invention;
FIG. 16 is a schematic diagram of still another information transmission method according to an embodiment of the present invention;
FIG. 17 is a schematic diagram of still another information acquiring method according to an embodiment of the present invention;
FIG. 18 is a schematic structural diagram of a base station according to an embodiment of the present invention;
FIG. 19 is a schematic structural diagram of another user equipment according to an embodiment of the present invention;
FIG. 20 is a schematic structural diagram of another radio network controller according to an embodiment of the present invention;
FIG. 21 is a schematic composition diagram of a network side device according to an embodiment of the present invention; and
FIG. 22 is a schematic structural diagram of still another user equipment according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

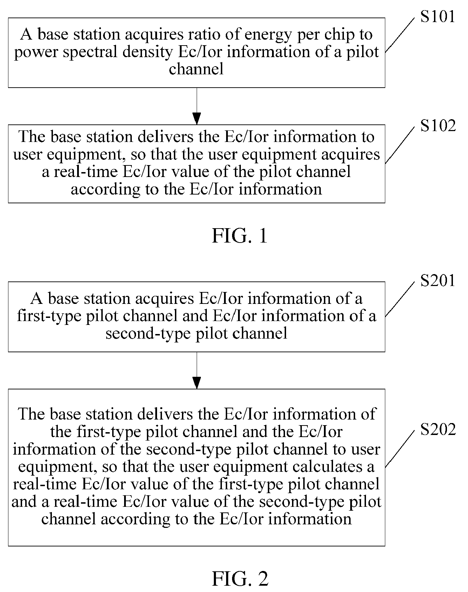

Referring to FIG. 1, which is a schematic flowchart of a first embodiment of an information transmission method according to the present invention, in this embodiment, the method includes the following steps:

S101: A base station acquires ratio of energy per chip to power spectral density Ec/Ior information of a pilot channel.

Specifically, the Ec/Ior information may include an initial Ec/Ior value and a real-time Ec/Ior value. The initial Ec/Ior value may be directly acquired by the base station, and certainly, a radio network controller (Radio Network Controller, RNC for short) may also preset a negotiated value according to a signal transmission state of the base station. Other information such as the real-time Ec/Ior value is acquired by the base station. It should be noted that, in this embodiment, the base station may also acquire ratio of power spectral density to energy per chip of a pilot channel Ior/Ec information whose function is the same as that of the Ec/Ior information; therefore the Ec/Ior information is not used to limit the present invention. Any simple variation or replacement made to the Ec/Ior information based on the idea of the present invention belongs to the protection scope of the present invention.

The pilot channel may include a first-type pilot channel and/or a second-type pilot channel, where the first-type pilot channel is a downlink pilot channel between the base station and user equipment, the second-type pilot channel is a downlink pilot channel causing interference to a signal sent by the first-type pilot channel, and the second-type pilot channel comes from the base station or an adjacent base station of the base station.

If both the first-type pilot channel and the second-type pilot channel come from the base station, the base station may directly acquire Ec/Ior information of the first-type pilot channel and Ec/Ior information of the second-type pilot channel; or if the first-type pilot channel comes from the base station and the second-type pilot channel comes from the adjacent base station of the base station, the base station establishes a data path to the adjacent base station to acquire Ec/Ior information of the second-type pilot channel, or receives Ec/Ior information of the second-type pilot channel delivered by the radio network controller, where the Ec/Ior information of the second-type pilot channel is reported by the adjacent base station of the base station to the radio network controller.

S102: The base station delivers the Ec/Ior information to user equipment, so that the user equipment acquires a real-time Ec/Ior value of the pilot channel according to the Ec/Ior information.

It should be noted that, a person skilled in the art should know that, according to related communications protocols such as the 3GPP, there is only description of an Ec/Ior value, the real-time Ec/Ior value in this embodiment refers to a current Ec/Ior value that is acquired by the user equipment according to the Ec/Ior information or the Ior/Ec information delivered by the base station, that is, the real-time Ec/Ior value is equivalent to the current Ec/Ior value, and no new terms are defined to represent that the description in the following specification is similar to this, and no further details are described herein again.

The Ec/Ior information may include an absolute real-time Ec/Ior value of the pilot channel, where the absolute real-time Ec/Ior value is an absolute value of the real-time Ec/Ior value; or
the Ec/Ior information includes an initial Ec/Ior value of the pilot channel and a relative Ec/Ior value of the pilot channel, where the initial Ec/Ior value is an absolute value, and the relative Ec/Ior value is a value of the real-time Ec/Ior value relative to the corresponding initial Ec/Ior value; or
the Ec/Ior information includes a relative Ec/Ior value of the pilot channel, where the relative Ec/Ior value is a value of the real-time Ec/Ior value relative to a corresponding initial Ec/Ior value, and the initial Ec/Ior value is configured by the radio network controller and is delivered to the user equipment; or
the Ec/Ior information includes a real-time Ec/Ior value of a primary common pilot channel and an offset value between a secondary common pilot channel and the corresponding primary common pilot channel, where the real-time Ec/Ior value of the primary common pilot channel is an absolute value or a relative value corresponding to an initial Ec/Ior value of the primary common pilot channel, and the offset value remains unchanged.

It should be noted that the absolute value described in the present invention is not an absolute value from the perspective of mathematics, for example, a distance between two points on a number axis, but a current Ec/Ior value is used as a constant numerical value, that is, an absolute numerical value, while the relative value is a relative numerical value using an initial value as a reference object. The absolute value in the following embodiments also refers to an absolute numerical value, and no further details will be described in the following.

When delivering the Ec/Ior information to the user equipment, the base station may:
deliver the Ec/Ior information according to a preset period; or
when a difference between the real-time Ec/Ior value of the pilot channel and a real-time Ec/Ior value that is obtained when the Ec/Ior information is previously delivered reaches a preset difference, deliver the Ec/Ior information; or
deliver the Ec/Ior information according to a preset period, and if a difference between the real-time Ec/Ior value of the pilot channel and a real-time Ec/Ior value that is obtained when the Ec/Ior information is previously delivered reaches a preset difference within one preset period, deliver the Ec/Ior information.

For example, the Ec/Ior information may be delivered every 5 seconds; or when a difference between a current real-time Ec/Ior value and a previous real-time Ec/Ior value reaches 5, the Ec/Ior information is delivered; or the Ec/Ior information is delivered every 5 seconds, and when a difference between a current real-time Ec/Ior value and a previous real-time Ec/Ior value reaches 5 within 5 seconds, the Ec/Ior information is delivered, which may be specifically configured according to actual needs of the base station or the user equipment.

During delivery of the Ec/Ior information, an absolute real-time Ec/Ior value may be delivered to the user equipment, so that the user equipment may obtain an accurate real-time Ec/Ior value of the pilot channel without calculation; or an initial Ec/Ior value and information about relevance of the real-time Ec/Ior value to the initial Ec/Ior value may be delivered, so that the user equipment may also obtain an accurate real-time Ec/Ior value of the pilot channel; therefore, accuracy of calculating a balancing coefficient is relatively high, and after obtaining through calculation an accurate balancing coefficient, the user equipment can well compensate for a target signal, which helps the user equipment improve performance of receiving a signal.

Referring to FIG. 2, which is a schematic flowchart of a second embodiment of an information transmission method according to the present invention, in this embodiment, the method includes the following steps:
S201: A base station acquires Ec/Ior information of a first-type pilot channel and Ec/Ior information of a second-type pilot channel.

The pilot channel includes the first-type pilot channel and/or the second-type pilot channel, where the first-type pilot channel is a downlink pilot channel between the base station and user equipment, the second-type pilot channel is a downlink pilot channel causing interference to a signal sent by the first-type pilot channel, and the second-type pilot channel comes from the base station or an adjacent base station of the base station.

Specifically, with continuous development of communications technologies, network constructions become more complex, and there are more deployments of transmit sources. During calculation of a balancing coefficient, not only a real-time Ec/Ior value of the first-type pilot channel transmitting a target signal needs to be known, but also a real-time Ec/Ior value of the second-type pilot channel causing interference to transmission of a target signal by the base station needs to be known; therefore, when acquiring the Ec/Ior information, the base station needs to acquire the Ec/Ior information of both the first-type pilot channel and the second-type pilot channel. A pilot channel transmitting a target signal may be referred to as a target channel, and a pilot channel causing interference to transmission of a target signal may be referred to as an interference channel.

Certainly, it should be noted that, a person skilled in the art should understand that in addition to the second-type pilot channel, if there is another interference channel such as a third-type pilot channel, during acquiring of the Ec/Ior information, Ec/Ior information of the corresponding third-type channel also needs to be acquired and delivered to the user equipment.

The following gives descriptions by using several typical application scenarios as an example.

For a base station using a single transmit antenna for transmission, the base station needs to acquire Ec/Ior information of a pilot channel of the transmit antenna of the base station, and acquires, by using a radio network controller, Ec/Ior information of a pilot channel of a corresponding antenna of an adjacent base station of the base station.

For a multiple-input multiple-output (Multiple-InputMultiple-Out-put, MIMO for short) system, a base station transmits a signal by using multiple antennas; in this case, the base station needs to acquire Ec/Ior information of pilot channels of antennas used to transmit the target signal by the base station, and Ec/Ior information of a pilot channel of another antenna of the base station. Certainly, if a pilot channel of an adjacent base station of the base station also is an interference channel, the base station also needs to acquire Ec/Ior information of the pilot channel.

In addition, in the current research of the Universal Mobile Telecommunications System (Universal Mobile Telecommunications System, UMTS for short), a concept of cell portion (Cell Portion) is proposed. In the conventional UMTS network, each cell on a same frequency channel number at a same moment has only a single beam, where the beam may send downlink information to one or more users simultaneously, and multiple beams of multiple cells may be distinguished by using different scrambling code. However, in the cell portion, multiple conventional cells are combined, and the combined cell sends multiple beams to multiple users simultaneously, where these beams use the same scrambling code. That is, multiple sectors or beams sharing the same scrambling code form one logical cell, and these multiple sectors or beams may be sent by using an antenna group in a same geographical location, or may also be sent by using antenna groups in different geographical locations. The antenna group may include one antenna, or may also include multiple antennas.

In a scenario of cell portion, Ec/Ior information of a pilot channel of an antenna corresponding to a target transmit point transmitting a target signal and Ec/Ior information of a pilot channel of an antenna corresponding to a transmission interference point causing interference need to be acquired. The target transmit point and the transmission interference point may come from a same geographical location, or may also come from different geographical locations. If the target transmit point and the transmission interference point come from different geographical locations, a data path between a base station of the target transmit point and a base station of the transmission interference point needs to be established to acquire Ec/Ior information of a pilot channel of an antenna corresponding to the transmission interference point.

As can be known with reference to the foregoing cases, during acquiring the Ec/Ior information, if the first-type pilot channel comes from the base station and the second-type pilot channel comes from the adjacent base station of the base station, the base station establishes a data path to the adjacent base station, to acquire Ec/Ior information of the second-type pilot channel; or
receives Ec/Ior information of the second-type pilot channel delivered by the radio network controller, where the Ec/Ior information of the second-type pilot channel is reported by the adjacent base station of the base station to the radio network controller.

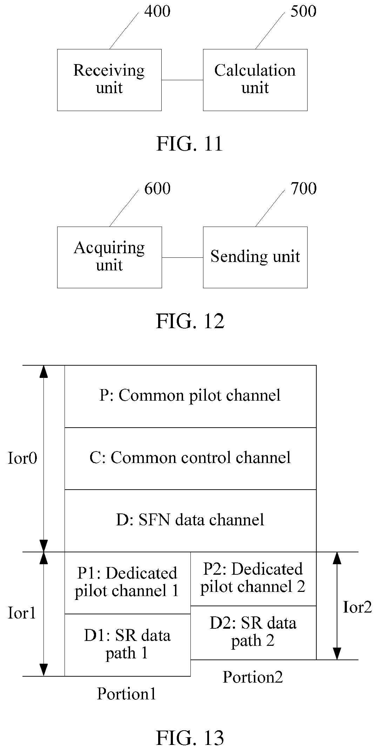

More specifically, in a scenario of cell portion, a common signal transmission mode includes a single frequency network (Single Frequency Network, SFN for short) mode and a spatial reuse (Spatial Reuse, SR) mode. Assuming that the two transmit points separately come from a Portion 1 and a Portion 2, in the SFN mode, the Portion 1 and the Portion 2 use same orthogonal variable spreading factor (Orthogonal Variable Spreading Factor, OVSF for short) code, and send a pilot P, common control information C, and data D to the user equipment at the same time; while in the SR mode, the Portion 1 and the Portion 2 use same OVSF code, and send a pilot P and common control information C to the user equipment at the same time, the Portion 1 may also send a dedicated pilot P1 and data D1 to the user equipment, and the Portion 2 may also send a dedicated pilot P2 and data D2 to the user equipment, where the OVSF code used by the P2 and the OVSF code used by the P1 are different, and the OVSF code used by the D2 and the OVSF code used by the D1 may be the same, or may also be different. If a channel sending the P1 and D1 is a target channel, a channel sending the P2 and the D2 is an interference channel for the user equipment. The SFN mode may coexist with the SR mode. Referring to FIG. 13, FIG. 13 is a schematic diagram of signal transmission when the SFN mode coexists with the SR mode in this embodiment of the present invention. Ior0 is common total signal transmit power of the Portion 1 and the Portion 2, Ior1 is independent signal transmit power of the Portion 1, and Ior2 is independent signal transmit power of the Portion 2. In a scenario in which the two modes coexist with each other, for a total Ec/Ior of a pilot channel, Ec refers to energy per chip of the pilot channel; the total Ior needs to be analyzed with reference to states of the Portion 1 and the Portion 2, and for different pilot channels, the total Ior may be total transmit power of an antenna beam corresponding to the pilot channel, that is, for the Portion 1 shown in FIG. 13, the total Ior is Ior0/2+Ior1, and for the Portion 2, the total Ior is Ior0/2+Ior2; the total Ior may also be total power of same signals that are sent by different beams sharing scrambling code, that is Ior0, or may also be total power of independent signals that are separately sent by different beams sharing scrambling code, that is, for the Portion 1, the total Ior is Ior1, and for the Portion 2, the total Ior is Ior2.

S202: The base station delivers the Ec/Ior information of the first-type pilot channel and the Ec/Ior information of the second-type pilot channel to user equipment, so that the user equipment calculates a real-time Ec/Ior value of the first-type pilot channel and a real-time Ec/Ior value of the second-type pilot channel according to the Ec/Ior information.

After obtaining the real-time Ec/Ior value of the first-type pilot channel and the real-time Ec/Ior value of the second-type pilot channel, the user equipment may calculate a balancing coefficient according to the accurate real-time values, to implement well compensation for a data channel corresponding to the pilot channel.

Certainly, it should be noted that, during delivery of the Ec/Ior information, the Ec/Ior information may be directly acquired and delivered by the base station, or may also be acquired by the base station and reported to the RNC, and then, delivered by the RNC. If the first-type pilot channel and the second-type pilot channel come from a same base station, the base station may directly acquire Ec/Ior information of two channels and report the Ec/Ior information to the RNC; or if the first-type pilot channel and the second-type pilot channel come from different base stations, two base stations need to separately acquire Ec/Ior information of both the first-type pilot channel and the second-type pilot channel, and report the Ec/Ior information to the RNC, and then, the RNC delivers the Ec/Ior information to the user equipment.

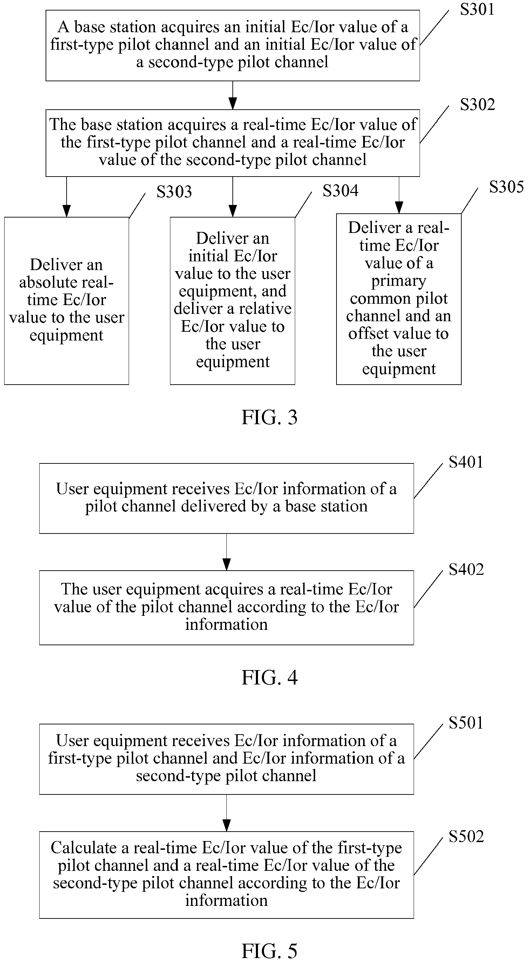

Referring to FIG. 3, which is a schematic flowchart of a third embodiment of an information transmission method according to the present invention, in this embodiment, the method includes the following steps:
S301: A base station acquires an initial Ec/Ior value of a first-type pilot channel and an initial Ec/Ior value of a second-type pilot channel.
S302: The base station acquires a real-time Ec/Ior value of the first-type pilot channel and a real-time Ec/Ior value of the second-type pilot channel.

During delivery of Ec/Ior information, the Ec/Ior information may be delivered in any manner in S303 to S305 according to requirements. During delivery of the Ec/Ior information, the Ec/Ior information may be delivered according to a preset period; or
when a difference between a real-time Ec/Ior value of a preset channel (which may be the first-type pilot channel, or may also be the second-type pilot channel) and a real-time Ec/Ior value obtained when the Ec/Ior information is previously delivered reaches a preset difference, the Ec/Ior information is delivered; or
the Ec/Ior information is delivered according to a preset period, and if a difference between a real-time Ec/Ior value of a preset channel and a real-time Ec/Ior value that is obtained when the Ec/Ior information is previously delivered reaches a preset difference within one preset period, the Ec/Ior information is delivered.

S303: Deliver an absolute real-time Ec/Ior value to user equipment.

The absolute real-time Ec/Ior value is an absolute value of the real-time Ec/Ior value, and the absolute real-time Ec/Ior value includes an absolute real-time Ec/Ior value of the first-type pilot channel and an absolute real-time Ec/Ior value of the second-type pilot channel.

S304: Deliver an initial Ec/Ior value to the user equipment, and deliver a relative Ec/Ior value to the user equipment.

The initial Ec/Ior value includes the initial Ec/Ior value of the first-type pilot channel and the initial Ec/Ior value of the second-type pilot channel, the initial Ec/Ior value is an absolute value, the relative Ec/Ior value is a value of the real-time Ec/Ior value relative to the corresponding initial Ec/Ior value, and the relative Ec/Ior value includes a relative Ec/Ior value of the first-type pilot channel and a relative Ec/Ior value of the second-type pilot channel. Certainly, only a relative Ec/Ior value may be delivered, and the initial Ec/Ior value is configured by a radio network controller and is delivered to the user equipment.

S305: Deliver a real-time Ec/Ior value of a primary common pilot channel and an offset value to the user equipment.

When the first-type pilot channel and the second-type pilot channel separately include a corresponding primary common pilot channel and secondary common pilot channel, where the offset value is an offset value between the secondary common pilot channel and the corresponding primary common pilot channel, the offset value includes an offset of the first-type pilot channel and an offset value of the second-type pilot channel, the real-time Ec/Ior value of the primary common pilot channel includes a real-time Ec/Ior value of the primary common pilot channel of the first-type pilot channel and a real-time Ec/Ior value of the primary common pilot channel of the second-type pilot channel, and the real-time Ec/Ior value of the primary common pilot channel is an absolute value or a relative value corresponding to an initial Ec/Ior value of the primary common pilot channel, the offset value remains unchanged, so that the user equipment calculates a real-time Ec/Ior value of the secondary common pilot channel of the first-type pilot channel and a real-time Ec/Ior value of the secondary common pilot channel of the second-type pilot channel according to the offset value.

It should be noted that, the offset value may be an offset value between an initial Ec/Ior value of the secondary common pilot channel and the initial Ec/Ior value of the corresponding primary common pilot channel, or may also be an offset value between a real-time Ec/Ior value of the secondary common pilot channel at a moment and a real-time Ec/Ior value of the corresponding primary common pilot channel, as long as it is ensured that the user equipment can obtain an accurate real-time Ec/Ior value of the secondary common pilot channel through calculation according to the offset value included in the Ec/Ior information. A manner of an offset value is used for delivery, as long as delivery is performed when the offset value changes. In this way, a real-time Ec/Ior value of the secondary common pilot channel at a moment may be obtained subsequently. Specifically, when the offset value remains unchanged, the offset value needs to be delivered only once. When the offset value changes according to the requirements of the base station, delivery needs to be performed only once again when the offset value changes. Compared with high-frequency real-time delivery, a manner of delivering an offset value can reduce a quantity of times of delivery of Ec/Ior information, thereby reducing signaling overheads and saving channel resources.

When delivery of the Ec/Ior information is completed, the user equipment may read the absolute real-time Ec/Ior value from the Ec/Ior information and use the absolute real-time Ec/Ior value as the real-time Ec/Ior value; or
read the relative Ec/Ior value and the initial Ec/Ior value from the Ec/Ior information, and add the relative Ec/Ior value and the initial Ec/Ior value to obtain the real-time Ec/Ior value; or
read the relative Ec/Ior value from the Ec/Ior information, receive the initial Ec/Ior value from the radio network controller, and add the relative Ec/Ior value and the initial Ec/Ior value to obtain the real-time Ec/Ior value; or
read the real-time Ec/Ior value of the primary common pilot channel in the pilot channel and the offset value from the Ec/Ior information, and add the real-time Ec/Ior value of the primary common pilot channel and the corresponding offset value to obtain a real-time Ec/Ior value of the secondary common pilot channel.

Then, a balancing coefficient is calculated according to obtained real-time Ec/Ior values of a target channel and an interference channel, to implement compensation for a data channel corresponding to the pilot channel.

It should be noted that, this embodiment is described by using a primary common pilot channel and a corresponding secondary common pilot channel. However, in some scenarios, the primary common pilot channel may also correspond to a demodulation common pilot or a dedicated pilot used in a cell portion described in step S201 in the third embodiment of the present invention. In a case in which there is no interference channel, manners of acquiring and delivering Ec/Ior information of a first-type pilot channel are similar to manners described in this embodiment, and no further details are described herein again.

Referring to FIG. 4, which is a schematic flowchart of a first embodiment of an information acquiring method according to the present invention, in this embodiment, the method includes:
S401: User equipment receives Ec/Ior information of a pilot channel delivered by a base station.

Specifically, the Ec/Ior information may include an initial Ec/Ior value and a real-time Ec/Ior value, or may also include a value of a real-time Ec/Ior value relative to an initial Ec/Ior value and the like. The initial Ec/Ior value may be directly acquired and delivered by the base station, and certainly, a radio network controller (Radio Network Controller, RNC for short) may also preset a negotiated value according to a signal transmission state of the base station and deliver the negotiated value. Other information such as the real-time Ec/Ior value is acquired and delivered by the base station.

The pilot channel may include a first-type pilot channel and/or a second-type pilot channel, where the first-type pilot channel is a downlink pilot channel between the base station and the user equipment, the second-type pilot channel is a downlink pilot channel causing interference to a signal sent by the first-type pilot channel, and the second-type pilot channel comes from the base station or an adjacent base station of the base station.

S402: The user equipment acquires a real-time Ec/Ior value of the pilot channel according to the Ec/Ior information.

Specifically, the Ec/Ior information includes an absolute real-time Ec/Ior value of the pilot channel, where the absolute real-time Ec/Ior value is an absolute value of the real-time Ec/Ior value; or
the Ec/Ior information includes an initial Ec/Ior value of the pilot channel and a relative Ec/Ior value of the pilot channel, where the initial Ec/Ior value is an absolute value, and the relative Ec/Ior value is a value of the real-time Ec/Ior value relative to the corresponding initial Ec/Ior value; or
the Ec/Ior information includes a relative Ec/Ior value of the pilot channel, where the relative Ec/Ior value is a value of the real-time Ec/Ior value relative to a corresponding initial Ec/Ior value, and the initial Ec/Ior value is configured by a radio network controller and is delivered to the user equipment; or
the Ec/Ior information includes a real-time Ec/Ior value of a primary common pilot channel and an offset value between a secondary common pilot channel and the corresponding primary common pilot channel, where the real-time Ec/Ior value of the primary common pilot channel is an absolute value or a relative value corresponding to an initial Ec/Ior value of the primary common pilot channel, and the offset value remains unchanged.

During receiving of Ec/Ior information, an absolute real-time Ec/Ior value may be received, so that user equipment may obtain an accurate real-time Ec/Ior value of a pilot channel without calculation; or an initial Ec/Ior value and information about relevance of a real-time Ec/Ior value to the initial Ec/Ior value may be received, so that user equipment may also obtain an accurate real-time Ec/Ior value of a pilot channel; therefore, accuracy of calculating a balancing coefficient is relatively high, and after obtaining through calculation an accurate balancing coefficient, the user equipment can well compensate for a target signal, which helps the user equipment improve performance of receiving a signal.

Referring to FIG. 5, which is a schematic flowchart of a second embodiment of an information acquiring method according to the present invention, in this embodiment, the method includes:
S501: User equipment receives Ec/Ior information of a first-type pilot channel and Ec/Ior information of a second-type pilot channel.

The first-type pilot channel is a downlink pilot channel between a base station and the user equipment, the second-type pilot channel is a downlink pilot channel causing interference to s signal sent by the first-type pilot channel, and the second-type pilot channel comes from the base station or an adjacent base station of the base station.

Specifically, with continuous development of communications technologies, network constructions become more complex, and there are more deployments of transmit sources. During calculation of a balancing coefficient, not only a real-time Ec/Ior value of the first-type pilot channel transmitting a target signal needs to be known, but also a real-time Ec/Ior value of the second-type pilot channel causing interference to transmission of a target signal by the base station needs to be known; therefore, when acquiring the Ec/Ior information, the base station needs to acquire the Ec/Ior information of both the first-type pilot channel and the second-type pilot channel. A pilot channel transmitting a target signal may be referred to as a target channel, and a pilot channel causing interference to transmission of a target signal may be referred to as an interference channel.

Certainly, it should be noted that, a person skilled in the art should understand that in addition to the second-type pilot channel, if there is another interference channel such as a third-type pilot channel, during receiving of the Ec/Ior information, Ec/Ior information of the corresponding third-type channel also needs to be received.

S502: Calculate a real-time Ec/Ior value of the first-type pilot channel and a real-time Ec/Ior value of the second-type pilot channel according to the Ec/Ior information.

If the Ec/Ior information received by the user equipment is an absolute real-time Ec/Ior value, where the absolute real-time Ec/Ior value is an absolute value of the real-time Ec/Ior value and the absolute real-time Ec/Ior value includes an absolute real-time Ec/Ior value of the first-type pilot channel and an absolute real-time Ec/Ior value of the second-type pilot channel, the user equipment reads the absolute real-time Ec/Ior value from the Ec/Ior information and uses the absolute real-time Ec/Ior value as the real-time Ec/Ior value; or
if the Ec/Ior information received by the user equipment is an initial Ec/Ior value and a relative Ec/Ior value, where the initial Ec/Ior value includes an initial Ec/Ior value of the first-type pilot channel and an initial Ec/Ior value of the second-type pilot channel, the initial Ec/Ior value is an absolute value, the relative Ec/Ior value is a value of the real-time Ec/Ior value relative to the corresponding initial Ec/Ior value, and the relative Ec/Ior value includes a relative Ec/Ior value of the first-type pilot channel and a relative Ec/Ior value of the second-type pilot channel, the user equipment may read the relative Ec/Ior value and the initial Ec/Ior value from the Ec/Ior information, and adds the relative Ec/Ior value and the initial Ec/Ior value to obtain the real-time Ec/Ior value; or
if the Ec/Ior information received by the user equipment is a relative Ec/Ior value, where the relative Ec/Ior value is a value of the real-time Ec/Ior value relative to a corresponding initial Ec/Ior value and the relative Ec/Ior value includes a relative Ec/Ior value of the first-type pilot channel and a relative Ec/Ior value of the second-type pilot channel, the user equipment may receive the initial Ec/Ior value from a radio network controller, where the initial Ec/Ior value includes an initial Ec/Ior value of the first-type pilot channel and an initial Ec/Ior value of the second-type pilot channel and the initial Ec/Ior value is an absolute value, and then add the relative Ec/Ior value and the initial Ec/Ior value to obtain the real-time Ec/Ior value; or
if the Ec/Ior information received by the user equipment is a real-time Ec/Ior value of a primary common pilot channel and an offset value, where the offset value is an offset value between a secondary common pilot channel and the corresponding primary common pilot channel, it should be noted that, the offset value may be an offset value between an initial Ec/Ior value of the secondary common pilot channel and an initial Ec/Ior value of the corresponding primary common pilot channel, or may also be an offset value between a real-time Ec/Ior value of the secondary common pilot channel at a moment and a real-time Ec/Ior value of the corresponding primary common pilot channel, the offset value includes an offset value of the first-type pilot channel and an offset value of the second-type pilot channel, the real-time Ec/Ior value of the primary common pilot channel includes a real-time Ec/Ior value of a primary common pilot channel of the first-type pilot channel and a real-time Ec/Ior value of a primary common pilot channel of the second-type pilot channel, and the real-time Ec/Ior value of the primary common pilot channel is an absolute value or a relative value corresponding to the initial Ec/Ior value of the primary common pilot channel, the user equipment may read the real-time Ec/Ior value of the primary common pilot channel in the pilot channel and the offset value from the Ec/Ior information, and add the real-time Ec/Ior value of the primary common pilot channel and the corresponding offset value to obtain a real-time Ec/Ior value of the secondary common pilot channel.

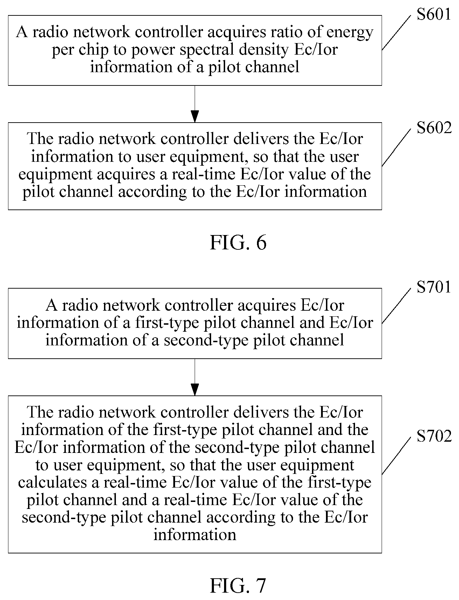

Referring to FIG. 6, which is a schematic flowchart of a first embodiment of another information transmission method according to the present invention, in this embodiment, the method includes the following steps:
S601: A radio network controller acquires ratio of energy per chip to power spectral density Ec/Ior information of a pilot channel.

Specifically, the Ec/Ior information may include an initial Ec/Ior value and a real-time Ec/Ior value. The initial Ec/Ior value may be directly acquired by the base station, and certainly, a radio network controller (Radio Network Controller, RNC for short) may also preset a negotiated value according to a signal transmission state of the base station. Other information such as the real-time Ec/Ior value is acquired by the radio network controller from information reported by the base station.

The pilot channel may include a first-type pilot channel and/or a second-type pilot channel, where the first-type pilot channel is a downlink pilot channel between the base station and user equipment, the second-type pilot channel is a downlink pilot channel causing interference to a signal sent by the first-type pilot channel, and the second-type pilot channel comes from the base station or an adjacent base station of the base station.

If both the first-type pilot channel and the second-type pilot channel come from the base station, the base station may directly acquire Ec/Ior information of the first-type pilot channel and Ec/Ior information of the second-type pilot channel; or if the first-type pilot channel comes from the base station and the second-type pilot channel comes from the adjacent base station of the base station, the base station establishes a data path to the adjacent base station to acquire Ec/Ior information of the second-type pilot channel, or receives Ec/Ior information of the second-type pilot channel delivered by the radio network controller, where the Ec/Ior information of the second-type pilot channel is reported by the adjacent base station of the base station to the radio network controller.

S602: The radio network controller delivers the Ec/Ior information to user equipment, so that the user equipment acquires a real-time Ec/Ior value of the pilot channel according to the Ec/Ior information.

The Ec/Ior information may include an absolute real-time Ec/Ior value of the pilot channel, where the absolute real-time Ec/Ior value is an absolute value of the real-time Ec/Ior value; or
the Ec/Ior information includes an initial Ec/Ior value of the pilot channel and a relative Ec/Ior value of the pilot channel, where the initial Ec/Ior value is an absolute value, and the relative Ec/Ior value is a value of the real-time Ec/Ior value relative to the corresponding initial Ec/Ior value; or
the Ec/Ior information includes a relative Ec/Ior value of the pilot channel, where the relative Ec/Ior value is a value of the real-time Ec/Ior value relative to a corresponding initial Ec/Ior value, and the initial Ec/Ior value is configured by the radio network controller and is delivered to the user equipment; or
the Ec/Ior information includes a real-time Ec/Ior value of a primary common pilot channel and an offset value between a secondary common pilot channel and the corresponding primary common pilot channel, where the real-time Ec/Ior value of the primary common pilot channel is an absolute value or a relative value corresponding to an initial Ec/Ior value of the primary common pilot channel, and the offset value remains unchanged.

When delivering the Ec/Ior information to the user equipment, the radio network controller may:
deliver the Ec/Ior information according to a preset period; or
when a difference between the real-time Ec/Ior value of the pilot channel and a real-time Ec/Ior value that is obtained when the Ec/Ior information is previously delivered reaches a preset difference, deliver the Ec/Ior information; or
deliver the Ec/Ior information according to a preset period, and if a difference between the real-time Ec/Ior value of the pilot channel and a real-time Ec/Ior value that is obtained when the Ec/Ior information is previously delivered reaches a preset difference within one preset period, deliver the Ec/Ior information.

For example, the Ec/Ior information may be delivered every 5 seconds; or when a difference between a current real-time Ec/Ior value and a previous real-time Ec/Ior value reaches 5, the Ec/Ior information is delivered; or the Ec/Ior information is delivered every 5 seconds, and when a difference between a current real-time Ec/Ior value and a previous real-time Ec/Ior value reaches 5 within 5 seconds, the Ec/Ior information is delivered, which may be specifically configured according to actual needs of the radio network controller or the user equipment.

During delivery of the Ec/Ior information, an absolute real-time Ec/Ior value may be delivered to user equipment, so that the user equipment may obtain an accurate real-time Ec/Ior value of a pilot channel without calculation; or an initial Ec/Ior value and information about relevance of a real-time Ec/Ior value to the initial Ec/Ior value may be delivered, so that the user equipment may also obtain an accurate real-time Ec/Ior value of a pilot channel; therefore, accuracy of calculating a balancing coefficient is relatively high, and after obtaining through calculation an accurate balancing coefficient, the user equipment can well compensate for a target signal, which helps the user equipment improve performance of receiving a signal.

Referring to FIG. 7, which is a schematic flowchart of a second embodiment of another information transmission method according to the present invention, in this embodiment, the method includes the following steps:
S701: A radio network controller acquires Ec/Ior information of a first-type pilot channel and Ec/Ior information of a second-type pilot channel.

The pilot channel includes the first-type pilot channel and/or the second-type pilot channel, where the first-type pilot channel is a downlink pilot channel between a base station and user equipment, the second-type pilot channel is a downlink pilot channel causing interference to a signal sent by the first-type pilot channel, and the second-type pilot channel comes from the base station or an adjacent base station of the base station.

Specifically, with continuous development of communications technologies, network constructions become more complex, and there are more deployments of transmit sources. During calculation of a balancing coefficient, not only a real-time Ec/Ior value of the first-type pilot channel transmitting a target signal needs to be known, but also a real-time Ec/Ior value of the second-type pilot channel causing interference to transmission of a target signal by the base station needs to be known; therefore, when acquiring the Ec/Ior information, the base station needs to acquire the Ec/Ior information of both the first-type pilot channel and the second-type pilot channel. A pilot channel transmitting a target signal may be referred to as a target channel, and a pilot channel causing interference to transmission of a target signal may be referred to as an interference channel.

Certainly, it should be noted that, a person skilled in the art should understand that in addition to the second-type pilot channel, if there is another interference channel such as a third-type pilot channel, during acquiring of the Ec/Ior information, Ec/Ior information of the corresponding third-type channel also needs to be acquired and delivered to the user equipment.

The following gives descriptions by using several typical application scenarios as an example.

For a base station using a single transmit antenna for transmission, the base station needs to acquire Ec/Ior information of a pilot channel of the transmit antenna of the base station, and acquires, by using the radio network controller, Ec/Ior information of a pilot channel of a corresponding antenna of an adjacent base station of the base station.

For a multiple-input multiple-output (Multiple-InputMultiple-Out-put, MIMO for short) system, a base station transmits a signal by using multiple antennas; in this case, the base station needs to acquire Ec/Ior information of pilot channels of antennas used to transmit the target signal by the base station, and Ec/Ior information of a pilot channel of another antenna of the base station. Certainly, if a pilot channel of an adjacent base station of the base station also is an interference channel, the base station also needs to acquire Ec/Ior information of the pilot channel.

In addition, in the current research of the Universal Mobile Telecommunications System (Universal Mobile Telecommunications System, UMTS for short), a concept of cell portion (Cell Portion) is proposed. In the conventional UMTS network, each cell on a same frequency channel number at a same moment has only a single beam, where the beam may send downlink information to one or more users simultaneously, and multiple beams of multiple cells may be distinguished by using different scrambling code. However, in the cell portion, multiple conventional cells are combined, and the combined cell sends multiple beams to multiple users simultaneously, where these beams use the same scrambling code. That is, multiple sectors or beams sharing the same scrambling code form one logical cell, and these multiple sectors or beams may be sent by using an antenna group in a same geographical location, or may also be sent by using antenna groups in different geographical locations. The antenna group may include one antenna, or may also include multiple antennas.

In a scenario of cell portion, Ec/Ior information of a pilot channel of an antenna corresponding to a target transmit point transmitting a target signal and Ec/Ior information of a pilot channel of an antenna corresponding to a transmission interference point causing interference need to be acquired. The target transmit point and the transmission interference point may come from a same geographical location, or may also come from different geographical locations. If the target transmit point and the transmission interference point come from different geographical locations, a data path between a base station of the target transmit point and a base station of the transmission interference point needs to be established to acquire Ec/Ior information of a pilot channel of an antenna corresponding to the transmission interference point.

As can be obtained with reference to the foregoing cases, if the first-type pilot channel comes from the base station and the second-type pilot channel comes from the base station, the radio network controller acquires Ec/Ior information of the first-type pilot channel and Ec/Ior information of the second-type pilot channel that are reported by the base station; or
if the first-type pilot channel comes from the base station and the second-type pilot channel comes from the adjacent base station of the base station, the radio network controller acquires Ec/Ior information of the first-type pilot channel reported by the base station, and acquires Ec/Ior information of the second-type pilot channel reported by the adjacent base station of the base station.

More specifically, in a scenario of cell portion, a common signal transmission mode includes a single frequency network (Single Frequency Network, SFN for short) mode and a spatial reuse (Spatial Reuse, SR) mode. Assuming that the two transmit points separately come from a Portion 1 and a Portion 2, in the SFN mode, the Portion 1 and the Portion 2 use same orthogonal variable spreading factor (Orthogonal Variable Spreading Factor, OVSF for short) code, and send a pilot P, common control information C, and data D to the user equipment at the same time; while in the SR mode, the Portion 1 and the Portion 2 use same OVSF code, and send a pilot P and common control information C to the user equipment at the same time, the Portion 1 may also send a dedicated pilot P1 and data D1 to the user equipment, and the Portion 2 may also send a dedicated pilot P2 and data D2 to the user equipment, where the OVSF code used by the P2 and the OVSF code used by the P1 are different, and the OVSF code used by the D2 and the OVSF code used by the D1 may be the same, or may also be different. If a channel sending the P1 and D1 is a target channel, a channel sending the P2 and the D2 is an interference channel for the user equipment. The SFN mode may coexist with the SR mode. Referring to FIG. 13, FIG. 13 is a schematic diagram of signal transmission when the SFN mode coexists with the SR mode in this embodiment of the present invention. Ior0 is common total signal transmit power of the Portion 1 and the Portion 2, Ior1 is independent signal transmit power of the Portion 1, and Ior2 is independent signal transmit power of the Portion 2. In a scenario in which the two modes coexist with each other, for a total Ec/Ior of a pilot channel, Ec refers to energy per chip of the pilot channel; the total Ior needs to be analyzed with reference to states of the Portion 1 and the Portion 2, and for different pilot channels, the total Ior may be total transmit power of an antenna beam corresponding to the pilot channel, that is, for the Portion 1 shown in FIG. 13, the total Ior is Ior0/2+Ior1, and for the Portion 2, the total Ior is Ior0/2+Ior2; the total Ior may also be total power of same signals that are sent by different beams sharing scrambling code, that is Ior0, or may also be total power of independent signals that are separately sent by different beams sharing scrambling code, that is, for the Portion 1, the total Ior is Ior1, and for the Portion 2, the total Ior is Ior2.

S702: The radio network controller delivers the Ec/Ior information of the first-type pilot channel and the Ec/Ior information of the second-type pilot channel to user equipment, so that the user equipment calculates a real-time Ec/Ior value of the first-type pilot channel and a real-time Ec/Ior value of the second-type pilot channel according to the Ec/Ior information.

After obtaining the real-time Ec/Ior value of the first-type pilot channel and the real-time Ec/Ior value of the second-type pilot channel, the user equipment may calculate a balancing coefficient according to the accurate real-time values, to implement well compensation for a data channel corresponding to the pilot channel.

Certainly, it should be noted that, during delivery of the Ec/Ior information, the Ec/Ior information may be acquired by the radio network controller from information reported by the base station and delivered, or may also be directly acquired and delivered to the user equipment by the base station.

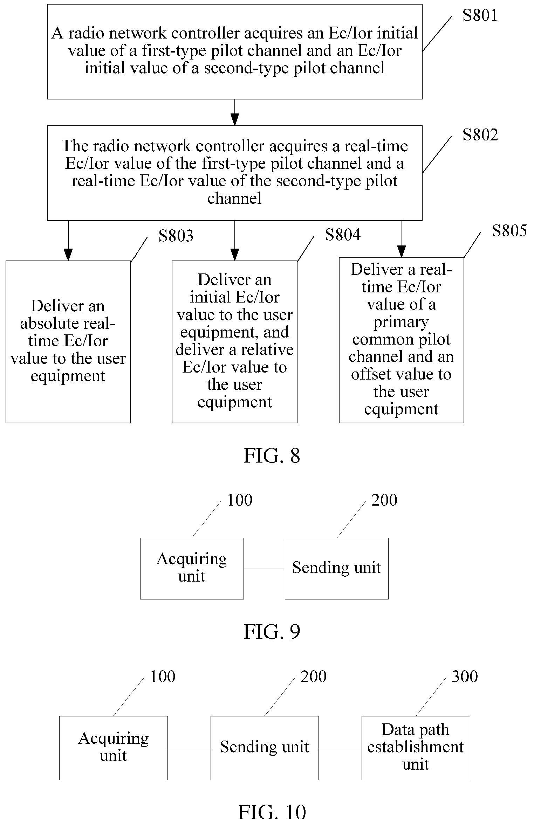

Referring to FIG. 8, which is a schematic flowchart of a third embodiment of another information transmission method according to the present invention, in this embodiment, the method includes the following steps:
S801: A radio network controller acquires an initial Ec/Ior value of a first-type pilot channel and an initial Ec/Ior value of a second-type pilot channel.
S802: The radio network controller acquires a real-time Ec/Ior value of the first-type pilot channel and a real-time Ec/Ior value of the second-type pilot channel.

During delivery of Ec/Ior information, the Ec/Ior information may be delivered in any manner in S803 to S805 according to requirements. During delivery of the Ec/Ior information, the Ec/Ior information may be delivered according to a preset period; or
when a difference between a real-time Ec/Ior value of a preset channel (which may be the first-type pilot channel, or may also be the second-type pilot channel) and a real-time Ec/Ior value obtained when the Ec/Ior information is previously delivered reaches a preset difference, the Ec/Ior information is delivered; or
the Ec/Ior information is delivered according to a preset period, and if a difference between a real-time Ec/Ior value of a preset channel and a real-time Ec/Ior value that is obtained when the Ec/Ior information is previously delivered reaches a preset difference within one preset period, the Ec/Ior information is delivered.

S803: Deliver an absolute real-time Ec/Ior value to the user equipment.

The absolute real-time Ec/Ior value is an absolute value of the real-time Ec/Ior value, and the absolute real-time Ec/Ior value includes an absolute real-time Ec/Ior value of the first-type pilot channel and an absolute real-time Ec/Ior value of the second-type pilot channel.

S804: Deliver an initial Ec/Ior value to the user equipment, and deliver a relative Ec/Ior value to the user equipment.

The initial Ec/Ior value includes an initial Ec/Ior value of the first-type pilot channel and an initial Ec/Ior value of the second-type pilot channel, the initial Ec/Ior value is an absolute value, the relative Ec/Ior value is a value of the real-time Ec/Ior value relative to the corresponding initial Ec/Ior value, and the relative Ec/Ior value includes a relative Ec/Ior value of the first-type pilot channel and a relative Ec/Ior value of the second-type pilot channel. Certainly, only a relative Ec/Ior value may be delivered, and the initial Ec/Ior value is configured by the radio network controller and is delivered to the user equipment.

S805: Deliver a real-time Ec/Ior value of a primary common pilot channel and an offset value to the user equipment.

When the first-type pilot channel and the second-type pilot channel separately include a corresponding primary common pilot channel and secondary common pilot channel, where the offset value is an offset value between the secondary common pilot channel and the corresponding primary common pilot channel, the offset value includes an offset of the first-type pilot channel and an offset value of the second-type pilot channel, a real-time Ec/Ior value of the primary common pilot channel includes a real-time Ec/Ior value of the primary common pilot channel of the first-type pilot channel and a real-time Ec/Ior value of the primary common pilot channel of the second-type pilot channel, and the real-time Ec/Ior value of the primary common pilot channel is an absolute value or a relative value corresponding to an initial Ec/Ior value of the primary common pilot channel, the offset value remains unchanged, so that the user equipment calculates a real-time Ec/Ior value of the secondary common pilot channel of the first-type pilot channel and a real-time Ec/Ior value of the secondary common pilot channel of the second-type pilot channel according to the offset value.

It should be noted that, the offset value may be an offset value between an initial Ec/Ior value of the secondary common pilot channel and the initial Ec/Ior value of the corresponding primary common pilot channel, or may also be an offset value between a real-time Ec/Ior value of the secondary common pilot channel at a moment and a real-time Ec/Ior value of the corresponding primary common pilot channel, as long as it is ensured that the user equipment can obtain an accurate real-time Ec/Ior value of the secondary common pilot channel through calculation according to the offset value included in the Ec/Ior information. A manner of an offset value is used for delivery, as long as delivery is performed when the offset value changes. In this way, a real-time Ec/Ior value of the secondary common pilot channel at a moment may be obtained subsequently. Specifically, when the offset value remains unchanged, the offset value needs to be delivered only once. When the offset value changes according to the requirements of the base station, delivery needs to be performed only once again when the offset value changes. Compared with high-frequency real-time delivery, a manner of delivery by using an offset value can reduce a quantity of times of delivery of Ec/Ior information, thereby reducing signaling overheads and saving channel resources.

When delivery of the Ec/Ior information is completed, the user equipment may read the absolute real-time Ec/Ior value from the Ec/Ior information and use the absolute real-time Ec/Ior value as the real-time Ec/Ior value; or
read the relative Ec/Ior value and the initial Ec/Ior value from the Ec/Ior information, and add the relative Ec/Ior value and the initial Ec/Ior value to obtain the real-time Ec/Ior value; or
read the relative Ec/Ior value from the Ec/Ior information, receive the initial Ec/Ior value from the radio network controller, and add the relative Ec/Ior value and the initial Ec/Ior value to obtain the real-time Ec/Ior value; or
read the real-time Ec/Ior value of the primary common pilot channel in the pilot channel and the offset value from the Ec/Ior information, and add the real-time Ec/Ior value of the primary common pilot channel and the corresponding offset value to obtain a real-time Ec/Ior value of the secondary common pilot channel.

Then, a balancing coefficient is calculated according to obtained real-time Ec/Ior values of a target channel and an interference channel, to implement compensation for a data channel corresponding to the pilot channel.

It should be noted that, this embodiment is described by using a primary common pilot channel and a corresponding secondary common pilot channel. However, in some scenarios, the primary common pilot channel may also correspond to a demodulation common pilot or a dedicated pilot used in a cell portion described in step S701 in the seventh embodiment of the present invention. In a case in which there is no interference channel, manners of acquiring and delivering Ec/Ior information of a first-type pilot channel are similar to manners described in this embodiment, and no further details are described herein again.

Referring to FIG. 9, which is a schematic composition diagram of a first embodiment of a base station according to the present invention, in this embodiment, the base station includes an acquiring unit 100 and a sending unit 200.

The acquiring unit 100 is configured to acquire ratio of energy per chip to power spectral density Ec/Ior information of a pilot channel.

Specifically, the Ec/Ior information may include an initial Ec/Ior value and a real-time Ec/Ior value. The initial Ec/Ior value may be directly acquired by the base station, and certainly, a radio network controller (Radio Network Controller, RNC for short) may also preset a negotiated value according to a signal transmission state of the base station. Other information such as the real-time Ec/Ior value is acquired by the base station.

The sending unit 200 is configured to deliver the Ec/Ior information to user equipment, so that the user equipment acquires a real-time Ec/Ior value of the pilot channel according to the Ec/Ior information.

During delivery of the Ec/Ior information, an absolute real-time Ec/Ior value may be delivered to the user equipment, so that the user equipment may obtain an accurate real-time Ec/Ior value of the pilot channel without calculation; or an initial Ec/Ior value and information about relevance of the real-time Ec/Ior value to the initial Ec/Ior value may be delivered, so that the user equipment may also obtain an accurate real-time Ec/Ior value of the pilot channel; therefore, accuracy of calculating a balancing coefficient is relatively high, and after obtaining through calculation an accurate balancing coefficient, the user equipment can well compensate for a target signal, which helps the user equipment improve performance of receiving a signal.

The acquiring unit 100 is specifically configured to:
acquire an initial Ec/Ior value of the pilot channel and a real-time Ec/Ior value of the pilot channel.

It may specifically include:
acquire an initial Ec/Ior value of a first-type pilot channel and an initial Ec/Ior value of a second-type pilot channel; and
acquire a real-time Ec/Ior value of the first-type pilot channel and a real-time Ec/Ior value of the second-type pilot channel.

The pilot channel includes the first-type pilot channel and/or the second-type pilot channel, where the first-type pilot channel is a downlink pilot channel between the base station and the user equipment, the second-type pilot channel is a downlink pilot channel causing interference to a signal sent by the first-type pilot channel, and the second-type pilot channel comes from the base station or an adjacent base station of the base station.

Specifically, with continuous development of communications technologies, network constructions become more complex, and there are more deployments of transmit sources. During calculation of a balancing coefficient, not only the real-time Ec/Ior value of the first-type pilot channel transmitting a target signal needs to be known, but also the real-time Ec/Ior value of the second-type pilot channel causing interference to transmission of a target signal by the base station needs to be known; therefore, when acquiring the Ec/Ior information, the base station needs to acquire Ec/Ior information of both the first-type pilot channel and the second-type pilot channel. A pilot channel transmitting a target signal may be referred to as a target channel, and a pilot channel causing interference to transmission of a target signal may be referred to as an interference channel.

Certainly, it should be noted that, a person skilled in the art should understand that, in addition to the second-type pilot channel, if there is another interference channel such as a third-type pilot channel, during acquiring of the Ec/Ior information, Ec/Ior information of the corresponding third-type channel also needs to be acquired and delivered to the user equipment.

The following gives descriptions by using several typical application scenarios as an example.

For a base station using a single transmit antenna for transmission, the base station needs to acquire Ec/Ior information of a pilot channel of the transmit antenna of the base station, and acquires, by using the radio network controller, Ec/Ior information of a pilot channel of a corresponding antenna of an adjacent base station of the base station.

For a multiple-input multiple-output (Multiple-InputMultiple-Out-put, MIMO for short) system, a base station transmits a signal by using multiple antennas; in this case, the base station needs to acquire Ec/Ior information of pilot channels of antennas used to transmit the target signal by the base station, and Ec/Ior information of a pilot channel of another antenna of the base station. Certainly, if a pilot channel of an adjacent base station of the base station also is an interference channel, the base station also needs to acquire Ec/Ior information of the pilot channel.

In addition, in the current research of the Universal Mobile Telecommunications System (Universal Mobile Telecommunications System, UMTS for short), a concept of cell portion (Cell Portion) is proposed. In the conventional UMTS network, each cell on a same frequency channel number at a same moment has only a single beam, where the beam may send downlink information to one or more users simultaneously, and multiple beams of multiple cells may be distinguished by using different scrambling code. However, in the cell portion, multiple conventional cells are combined, and the combined cell sends multiple beams to multiple users simultaneously, where these beams use the same scrambling code. That is, multiple sectors or beams sharing the same scrambling code form one logical cell, and these multiple sectors or beams may be sent by using an antenna group in a same geographical location, or may also be sent by using antenna groups in different geographical locations. The antenna group may include one antenna, or may also include multiple antennas.

In a scenario of cell portion, Ec/Ior information of a pilot channel of an antenna corresponding to a target transmit point transmitting a target signal and Ec/Ior information of a pilot channel of an antenna corresponding to a transmission interference point causing interference need to be acquired. The target transmit point and the transmission interference point may come from a same geographical location, or may also come from different geographical locations. If the target transmit point and the transmission interference point come from different geographical locations, a data path between a base station of the target transmit point and a base station of the transmission interference point needs to be established to acquire Ec/Ior information of a pilot channel of an antenna corresponding to the transmission interference point.

As can be obtained with reference to the foregoing cases, during acquiring of the Ec/Ior information, if both the first-type pilot channel and the second-type pilot channel come from the base station, the base station directly acquires Ec/Ior information of the first-type pilot channel and Ec/Ior information of the second-type pilot channel; or if the first-type pilot channel comes from the base station and the second-type pilot channel comes from the adjacent base station of the base station, the base station establishes a data path to the adjacent base station to acquire Ec/Ior information of the second-type pilot channel, or receives Ec/Ior information of the second-type pilot channel delivered by the radio network controller, where the Ec/Ior information of the second-type pilot channel is reported by the adjacent base station of the base station to the radio network controller.

More specifically, in a scenario of cell portion, a common signal transmission mode includes a single frequency network (Single Frequency Network, SFN for short) mode and a spatial reuse (Spatial Reuse, SR) mode. Assuming that the two transmit points separately come from a Portion 1 and a Portion 2, in the SFN mode, the Portion 1 and the Portion 2 use same orthogonal variable spreading factor (Orthogonal Variable Spreading Factor, OVSF for short) code, and send a pilot P, common control information C, and data D to the user equipment at the same time; while in the SR mode, the Portion 1 and the Portion 2 use same OVSF code, and send a pilot P and common control information C to the user equipment at the same time, the Portion 1 may also send a dedicated pilot P1 and data D1 to the user equipment, and the Portion 2 may also send a dedicated pilot P2 and data D2 to the user equipment, where the OVSF code used by the P2 and the OVSF code used by the P1 are different, and the OVSF code used by the D2 and the OVSF code used by the D1 may be the same, or may also be different. If a channel sending the P1 and D1 is a target channel, a channel sending the P2 and the D2 is an interference channel for the user equipment. The SFN mode may coexist with the SR mode. Referring to FIG. 13, FIG. 13 is a schematic diagram of signal transmission when the SFN mode coexists with the SR mode in this embodiment of the present invention. Ior0 is common total signal transmit power of the Portion 1 and the Portion 2, Ior1 is independent signal transmit power of the Portion 1, and Ior2 is independent signal transmit power of the Portion 2. In a scenario in which the two modes coexist with each other, for a total Ec/Ior of a pilot channel, Ec refers to energy per chip of the pilot channel; the total Ior needs to be analyzed with reference to states of the Portion 1 and the Portion 2, and for different pilot channels, the total Ior may be total transmit power of an antenna beam corresponding to the pilot channel, that is, for the Portion 1 shown in FIG. 13, the total Ior is Ior0/2+Ior1, and for the Portion 2, the total Ior is Ior0/2+Ior2; the total Ior may also be total power of same signals that are sent by different beams sharing scrambling code, that is Ior0, or may also be total power of independent signals that are separately sent by different beams sharing scrambling code, that is, for the Portion 1, the total Ior is Ior1, and for the Portion 2, the total Ior is Ior2.

The sending unit 200 is specifically configured to:
deliver the Ec/Ior information according to a preset period; or
when a difference between the real-time Ec/Ior value of the pilot channel and a real-time Ec/Ior value that is obtained when the Ec/Ior information is previously delivered reaches a preset difference, deliver the Ec/Ior information; or
deliver the Ec/Ior information according to a preset period, and if a difference between the real-time Ec/Ior value of the pilot channel and a real-time Ec/Ior value that is obtained when the Ec/Ior information is previously delivered reaches a preset difference within one preset period, deliver the Ec/Ior information.

After obtaining the real-time Ec/Ior value of the first-type pilot channel and the real-time Ec/Ior value of the second-type pilot channel, the user equipment may calculate a balancing coefficient according to the accurate real-time values, to implement well compensation for a data channel corresponding to the pilot channel.

Certainly, it should be noted that, during delivery of the Ec/Ior information, the Ec/Ior information may be directly acquired and delivered by a base station, or may also be acquired by a base station and reported to an RNC, and then, delivered by the RNC. If the first-type pilot channel and the second-type pilot channel come from a same base station, the base station may directly acquire Ec/Ior information of two channels and report the Ec/Ior information to the RNC; or if the first-type pilot channel and the second-type pilot channel come from different base stations, two base stations need to separately acquire Ec/Ior information of both the first-type pilot channel and the second-type pilot channel, and report the Ec/Ior information to the RNC, and then, the RNC delivers the Ec/Ior information to the user equipment.

The Ec/Ior information may include an absolute real-time Ec/Ior value of the pilot channel, where the absolute real-time Ec/Ior value is an absolute value of the real-time Ec/Ior value; or
the Ec/Ior information includes an initial Ec/Ior value of the pilot channel and a relative Ec/Ior value of the pilot channel, where the initial Ec/Ior value is an absolute value, and the relative Ec/Ior value is a value of the real-time Ec/Ior value relative to the corresponding initial Ec/Ior value; or
the Ec/Ior information includes a relative Ec/Ior value of the pilot channel, where the relative Ec/Ior value is a value of the real-time Ec/Ior value relative to a corresponding initial Ec/Ior value, and the initial Ec/Ior value is configured by the radio network controller and is delivered to the user equipment; or
the Ec/Ior information includes a real-time Ec/Ior value of a primary common pilot channel and an offset value between a secondary common pilot channel and the corresponding primary common pilot channel, where the real-time Ec/Ior value of the primary common pilot channel is an absolute value or a relative value corresponding to an initial Ec/Ior value of the primary common pilot channel, and the offset value remains unchanged.

The sending unit 200 is specifically configured to:
deliver the absolute real-time Ec/Ior value to the user equipment, where
the absolute real-time Ec/Ior value is an absolute value of the real-time Ec/Ior value, and the absolute real-time Ec/Ior value includes an absolute real-time Ec/Ior value of the first-type pilot channel and an absolute real-time Ec/Ior value of the second-type pilot channel; or
deliver the initial Ec/Ior value to the user equipment, and deliver the relative Ec/Ior value to the user equipment.

The initial Ec/Ior value includes an initial Ec/Ior value of the first-type pilot channel and an initial Ec/Ior value of the second-type pilot channel, the initial Ec/Ior value is an absolute value, the relative Ec/Ior value is a value of the real-time Ec/Ior value relative to the corresponding initial Ec/Ior value, and the relative Ec/Ior value includes a relative Ec/Ior value of the first-type pilot channel and a relative Ec/Ior value of the second-type pilot channel. Certainly, only a relative Ec/Ior value may be delivered, and the initial Ec/Ior value is configured by the radio network controller and is delivered to the user equipment; or
the real-time Ec/Ior value of the primary common pilot channel and the offset value are delivered to the user equipment.

When the first-type pilot channel and the second-type pilot channel separately include a corresponding primary common pilot channel and secondary common pilot channel, where the offset value is an offset value between the secondary common pilot channel and the corresponding primary common pilot channel, the offset value includes an offset of the first-type pilot channel and an offset value of the second-type pilot channel, the real-time Ec/Ior value of the primary common pilot channel includes a real-time Ec/Ior value of the primary common pilot channel of the first-type pilot channel and a real-time Ec/Ior value of the primary common pilot channel of the second-type pilot channel, and the real-time Ec/Ior value of the primary common pilot channel is an absolute value or a relative value corresponding to the initial Ec/Ior value of the primary common pilot channel, the offset value remains unchanged, so that the user equipment calculates a real-time Ec/Ior value of the secondary common pilot channel of the first-type pilot channel and a real-time Ec/Ior value of the secondary common pilot channel of the second-type pilot channel according to the offset value.

It should be noted that, the offset value may be an offset value between an initial Ec/Ior value of the secondary common pilot channel and the initial Ec/Ior value of the corresponding primary common pilot channel, or may also be an offset value between a real-time Ec/Ior value of the secondary common pilot channel at a moment and a real-time Ec/Ior value of the corresponding primary common pilot channel, as long as it is ensured that the user equipment can obtain an accurate real-time Ec/Ior value of the secondary common pilot channel through calculation according to the offset value included in the Ec/Ior information. A manner of an offset value is used for delivery, as long as delivery is performed when the offset value changes. In this way, a real-time Ec/Ior value of the secondary common pilot channel at a moment may be obtained subsequently. Specifically, when the offset value remains unchanged, the offset value needs to be delivered only once. When the offset value changes according to the requirements of the base station, delivery needs to be performed only once again when the offset value changes. Compared with high-frequency real-time delivery, a manner of delivery by using an offset value can reduce a quantity of times of delivery of Ec/Ior information, thereby reducing signaling overheads and saving channel resources.

When delivery of the Ec/Ior information is completed, the user equipment may read the absolute real-time Ec/Ior value from the Ec/Ior information and use the absolute real-time Ec/Ior value as the real-time Ec/Ior value; or
read the relative Ec/Ior value and the initial Ec/Ior value from the Ec/Ior information, and add the relative Ec/Ior value and the initial Ec/Ior value to obtain the real-time Ec/Ior value; or
read the relative Ec/Ior value from the Ec/Ior information, receive the initial Ec/Ior value from the radio network controller, and add the relative Ec/Ior value and the initial Ec/Ior value to obtain the real-time Ec/Ior value; or
read the real-time Ec/Ior value of the primary common pilot channel in the pilot channel and the offset value from the Ec/Ior information, and add the real-time Ec/Ior value of the primary common pilot channel and the corresponding offset value to obtain a real-time Ec/Ior value of the secondary common pilot channel.

Then, a balancing coefficient is calculated according to obtained real-time Ec/Ior values of a target channel and an interference channel, to implement compensation for a data channel corresponding to the pilot channel.

It should be noted that, this embodiment is described by using a primary common pilot channel and a corresponding secondary common pilot channel. However, in some scenarios, the primary common pilot channel may also correspond to a demodulation common pilot or a dedicated pilot used in a cell portion described in this embodiment of the present invention. In a case in which there is no interference channel, manners of acquiring and delivering Ec/Ior information of a first-type pilot channel are similar to manners described in this embodiment, and no further details are described herein again.

Referring to FIG. 10, which is a schematic composition diagram of a second embodiment of a base station according to the present invention, in this embodiment, the base station includes:
an acquiring unit 100, configured to acquire ratio of energy per chip to power spectral density Ec/Ior information of a pilot channel; and
a sending unit 200, configured to deliver the Ec/Ior information to user equipment, so that the user equipment acquires a real-time Ec/Ior value of the pilot channel according to the Ec/Ior information.

The acquiring unit 100 is specifically configured to:
acquire an initial Ec/Ior value of the pilot channel and a real-time Ec/Ior value of the pilot channel,

It may specifically include:
acquire an initial Ec/Ior value of a first-type pilot channel and an initial Ec/Ior value of a second-type pilot channel; and
acquire a real-time Ec/Ior value of the first-type pilot channel and a real-time Ec/Ior value of the second-type pilot channel.

The pilot channel includes the first-type pilot channel and/or the second-type pilot channel, where the first-type pilot channel is a downlink pilot channel between the base station and the user equipment, the second-type pilot channel is a downlink pilot channel causing interference to a signal sent by the first-type pilot channel, and the second-type pilot channel comes from the base station or an adjacent base station of the base station.

During acquiring of the Ec/Ior information, if both the first-type pilot channel and the second-type pilot channel come from the base station, the base station directly acquires Ec/Ior information of the first-type pilot channel and Ec/Ior information of the second-type pilot channel; or if the first-type pilot channel comes from the base station and the second-type pilot channel comes from the adjacent base station of the base station, the base station establishes a data path to the adjacent base station to acquire Ec/Ior information of the second-type pilot channel, or receives Ec/Ior information of the second-type pilot channel delivered by a radio network controller, where the Ec/Ior information of the second-type pilot channel is reported by the adjacent base station of the base station to the radio network controller.

The sending unit 200 is specifically configured to:
deliver the Ec/Ior information according to a preset period; or
when a difference between the real-time Ec/Ior value of the pilot channel and a real-time Ec/Ior value that is obtained when the Ec/Ior information is previously delivered reaches a preset difference, deliver the Ec/Ior information; or
deliver the Ec/Ior information according to a preset period, and if a difference between the real-time Ec/Ior value of the pilot channel and a real-time Ec/Ior value that is obtained when the Ec/Ior information is previously delivered reaches a preset difference within one preset period, deliver the Ec/Ior information.

The Ec/Ior information includes an initial Ec/Ior value of the pilot channel and an absolute real-time Ec/Ior value of the pilot channel, where the initial Ec/Ior value is an absolute value, and the absolute real-time Ec/Ior value is an absolute value of the real-time Ec/Ior value; or
the Ec/Ior information may include an absolute real-time Ec/Ior value of the pilot channel, where the absolute real-time Ec/Ior value is an absolute value of the real-time Ec/Ior value; or
the Ec/Ior information includes an initial Ec/Ior value of the pilot channel and a relative Ec/Ior value of the pilot channel, where the initial Ec/Ior value is an absolute value, and the relative Ec/Ior value is a value of the real-time Ec/Ior value relative to the corresponding initial Ec/Ior value; or
the Ec/Ior information includes a relative Ec/Ior value of the pilot channel, where the relative Ec/Ior value is a value of the real-time Ec/Ior value relative to a corresponding initial Ec/Ior value, and the initial Ec/Ior value is configured by the radio network controller and is delivered to the user equipment; or
the Ec/Ior information includes a real-time Ec/Ior value of a primary common pilot channel and an offset value between a secondary common pilot channel and the corresponding primary common pilot channel, where the real-time Ec/Ior value of the primary common pilot channel is an absolute value or a relative value corresponding to an initial Ec/Ior value of the primary common pilot channel, and the offset value remains unchanged.

The base station may further include:
a data path establishment unit 300, configured to: if the first-type pilot channel comes from the base station and the second-type pilot channel comes from the adjacent base station of the base station, establish, by the data path establishment unit 300, a data path to the adjacent base station to acquire the Ec/Ior information of the second-type pilot channel; or
certainly, the acquiring unit 100 may also receive the Ec/Ior information of the second-type pilot channel delivered by the radio network controller, where the Ec/Ior information of the second-type pilot channel is reported by the adjacent base station of the base station to the radio network controller.

Referring to FIG. 11, which is a schematic composition diagram of user equipment according to an embodiment of the present invention, in this embodiment, the user equipment includes:
a receiving unit 400, configured to receive Ec/Ior information of a pilot channel delivered by a base station; and
a calculation unit 500, configured to acquire a real-time Ec/Ior value of the pilot channel according to the Ec/Ior information.

The pilot channel includes a first-type pilot channel and/or a second-type pilot channel, where the first-type pilot channel is a downlink pilot channel between the base station and the user equipment, the second-type pilot channel is a downlink pilot channel causing interference to a signal sent by the first-type pilot channel, and the second-type pilot channel comes from the base station or an adjacent base station of the base station.

The Ec/Ior information includes an absolute real-time Ec/Ior value of the pilot channel, where the absolute real-time Ec/Ior value is an absolute value of the real-time Ec/Ior value; or
the Ec/Ior information includes an initial Ec/Ior value of the pilot channel and a relative Ec/Ior value of the pilot channel, where the initial Ec/Ior value is an absolute value, and the relative Ec/Ior value is a value of the real-time Ec/Ior value relative to the corresponding initial Ec/Ior value; or
the Ec/Ior information includes a relative Ec/Ior value of the pilot channel, where the relative Ec/Ior value is a value of the real-time Ec/Ior value relative to a corresponding initial Ec/Ior value, and the initial Ec/Ior value is configured by a radio network controller and is delivered to the user equipment; or
the Ec/Ior information includes a real-time Ec/Ior value of a primary common pilot channel and an offset value between a secondary common pilot channel and the corresponding primary common pilot channel, where the real-time Ec/Ior value of the primary common pilot channel is an absolute value or a relative value corresponding to an initial Ec/Ior value of the primary common pilot channel, and the offset value remains unchanged.

The receiving unit 500 is specifically configured to:
receive the initial Ec/Ior value and the absolute real-time Ec/Ior value, where the absolute real-time Ec/Ior value is an absolute value of the real-time Ec/Ior value and the absolute real-time Ec/Ior value includes an absolute real-time Ec/Ior value of the first-type pilot channel and an absolute real-time Ec/Ior value of the second-type pilot channel; or
receive the initial Ec/Ior value and the relative Ec/Ior value, where the initial Ec/Ior value includes an initial Ec/Ior value of the first-type pilot channel and an initial Ec/Ior value of the second-type pilot channel, the initial Ec/Ior value is an absolute value, the relative Ec/Ior value is a value of the real-time Ec/Ior value relative to the corresponding initial Ec/Ior value, and the relative Ec/Ior value includes a relative Ec/Ior value of the first-type pilot channel and a relative Ec/Ior value of the second-type pilot channel; or
receive the real-time Ec/Ior value of the primary common pilot channel and the offset value, where the offset value is an offset value between the secondary common pilot channel and the corresponding primary common pilot channel, it should be noted that, the offset value may be an offset value between an initial Ec/Ior value of the secondary common pilot channel and an initial Ec/Ior value of the corresponding primary common pilot channel, or may also be an offset value between a real-time Ec/Ior value of the secondary common pilot channel at a moment and a real-time Ec/Ior value of the corresponding primary common pilot channel, the offset value includes an offset value of the first-type pilot channel and an offset value of the second-type pilot channel, a real-time Ec/Ior value of the primary common pilot channel includes a real-time Ec/Ior value of a primary common pilot channel of the first-type pilot channel and a real-time Ec/Ior value of a primary common pilot channel of the second-type pilot channel, and the real-time Ec/Ior value of the primary common pilot channel is an absolute value, or a relative value corresponding to the initial Ec/Ior value of the primary common pilot channel.

The calculation unit 500 is specifically configured to:
read the absolute real-time Ec/Ior value from the Ec/Ior information, and use the absolute real-time Ec/Ior value as the real-time Ec/Ior value; or
read the relative Ec/Ior value and the initial Ec/Ior value from the Ec/Ior information, and add the relative Ec/Ior value and the initial Ec/Ior value to obtain the real-time Ec/Ior value; or
read the relative Ec/Ior value from the Ec/Ior information, receive the initial Ec/Ior value from the radio network controller, and add the relative Ec/Ior value and the initial Ec/Ior value to obtain the real-time Ec/Ior value; or
read the real-time Ec/Ior value of the primary common pilot channel in the pilot channel and the offset value from the Ec/Ior information, and add the real-time Ec/Ior value of the primary common pilot channel and the corresponding offset value to obtain a real-time Ec/Ior value of the secondary common pilot channel.

Referring to FIG. 12, which is a schematic composition diagram of a radio network controller according to an embodiment of the present invention, in this embodiment, the radio network controller includes: an acquiring unit 600 and a sending unit 700.

The acquiring unit 600 is configured to acquire ratio of energy per chip to power spectral density Ec/Ior information of a pilot channel.

Specifically, the Ec/Ior information may include an initial Ec/Ior value and a real-time Ec/Ior value. The initial Ec/Ior value may be directly acquired by a base station, and certainly, the radio network controller may also preset a negotiated value according to a signal transmission state of the base station. Other information such as the real-time Ec/Ior value is acquired by the radio network controller from information reported by the base station.

The sending unit 700 is configured to deliver the Ec/Ior information to user equipment, so that the user equipment acquires a real-time Ec/Ior value of the pilot channel according to the Ec/Ior information.

During delivery of the Ec/Ior information, an absolute real-time Ec/Ior value may be delivered to the user equipment, so that the user equipment may obtain an accurate real-time Ec/Ior value of the pilot channel without calculation; or an initial Ec/Ior value and information about relevance of the real-time Ec/Ior value to the initial Ec/Ior value may be delivered, so that the user equipment may also obtain an accurate real-time Ec/Ior value of the pilot channel; therefore, accuracy of calculating a balancing coefficient is relatively high, and after obtaining through calculation an accurate balancing coefficient, the user equipment can well compensate for a target signal, which helps the user equipment improve performance of receiving a signal.

The acquiring unit 700 is specifically configured to:
acquire an initial Ec/Ior value of the pilot channel and a real-time Ec/Ior value of the pilot channel,
   It may specifically include:
   acquire an initial Ec/Ior value of a first-type pilot channel and an initial Ec/Ior value of a second-type pilot channel; and
   acquire a real-time Ec/Ior value of the first-type pilot channel and a real-time Ec/Ior value of the second-type pilot channel.

The pilot channel includes the first-type pilot channel and/or the second-type pilot channel, where the first-type pilot channel is a downlink pilot channel between the base station and the user equipment, the second-type pilot channel is a downlink pilot channel causing interference to a signal sent by the first-type pilot channel, and the second-type pilot channel comes from the base station or an adjacent base station of the base station.

Specifically, with continuous development of communications technologies, network constructions become more complex, and there are more deployments of transmit sources. During calculation of a balancing coefficient, not only the real-time Ec/Ior value of the first-type pilot channel transmitting a target signal needs to be known, but also the real-time Ec/Ior value of the second-type pilot channel causing interference to transmission of a target signal by the base station needs to be known; therefore, when acquiring the Ec/Ior information, the base station needs to acquire the Ec/Ior information of both the first-type pilot channel and the second-type pilot channel. A pilot channel transmitting a target signal may be referred to as a target channel, and a pilot channel causing interference to transmission of a target signal may be referred to as an interference channel.

Certainly, it should be noted that, a person skilled in the art should understand that, in addition to the second-type pilot channel, if there is another interference channel such as a third-type pilot channel, during acquiring of the Ec/Ior information, Ec/Ior information of the corresponding third-type channel also needs to be acquired and delivered to the user equipment.

The following gives descriptions by using several typical application scenarios as an example.

For a base station using a single transmit antenna for transmission, the base station needs to acquire Ec/Ior information of a pilot channel of the transmit antenna of the base station, and acquires, by using the radio network controller, Ec/Ior information of a pilot channel of a corresponding antenna of an adjacent base station of the base station.

For a multiple-input multiple-output (Multiple-InputMultiple-Out-put, MIMO for short) system, a base station transmits a signal by using multiple antennas; in this case, the base station needs to acquire Ec/Ior information of pilot channels of antennas used to transmit the target signal by the base station, and Ec/Ior information of a pilot channel of another antenna of the base station. Certainly, if a pilot channel of an adjacent base station of the base station also is an interference channel, the base station also needs to acquire Ec/Ior information of the pilot channel.

In addition, in the current research of the Universal Mobile Telecommunications System (Universal Mobile Telecommunications System, UMTS for short), a concept of cell portion (Cell Portion) is proposed. In the conventional UMTS network, each cell on a same frequency channel number at a same moment has only a single beam, where the beam may send downlink information to one or more users simultaneously, and multiple beams of multiple cells may be distinguished by using different scrambling code. However, in the cell portion, multiple conventional cells are combined, and the combined cell sends multiple beams to multiple users simultaneously, where these beams use the same scrambling code. That is, multiple sectors or beams sharing the same scrambling code form one logical cell, and these multiple sectors or beams may be sent by using an antenna group in a same geographical location, or may also be sent by using antenna groups in different geographical locations. The antenna group may include one antenna, or may also include multiple antennas.

In a scenario of cell portion, Ec/Ior information of a pilot channel of an antenna corresponding to a target transmit point transmitting a target signal and Ec/Ior information of a pilot channel of an antenna corresponding to a transmission interference point causing interference need to be acquired. The target transmit point and the transmission interference point may come from a same geographical location, or may also come from different geographical locations. If the target transmit point and the transmission interference point come from different geographical locations, a data path between a base station of the target transmit point and a base station of the transmission interference point needs to be established to acquire Ec/Ior information of a pilot channel of an antenna corresponding to the transmission interference point.

As can be known with reference to the foregoing cases, the acquiring unit 600 is specifically configured to:
if the first-type pilot channel comes from the base station and the second-type pilot channel also comes from the base station, acquire the Ec/Ior information of the first-type pilot channel and the Ec/Ior information of the second-type pilot channel that are reported by the base station; or
if the first-type pilot channel comes from the base station and the second-type pilot channel comes from the adjacent base station of the base station, acquire the Ec/Ior information of the first-type pilot channel reported by the base station, and acquire the Ec/Ior information of the second-type pilot channel reported by the adjacent base station of the base station.

More specifically, in a scenario of cell portion, a common signal transmission mode includes a single frequency network (Single Frequency Network, SFN for short) mode and a spatial reuse (Spatial Reuse, SR) mode. Assuming that the two transmit points separately come from a Portion 1 and a Portion 2, in the SFN mode, the Portion 1 and the Portion 2 use same orthogonal variable spreading factor (Orthogonal Variable Spreading Factor, OVSF for short) code, and send a pilot P, common control information C, and data D to the user equipment at the same time; while in the SR mode, the Portion 1 and the Portion 2 use same OVSF code, and send a pilot P and common control information C to the user equipment at the same time, the Portion 1 may also send a dedicated pilot P1 and data D1 to the user equipment, and the Portion 2 may also send a dedicated pilot P2 and data D2 to the user equipment, where the OVSF code used by the P2 and the OVSF code used by the P1 are different, and the OVSF code used by the D2 and the OVSF code used by the D1 may be the same, or may also be different. If a channel sending the P1 and D1 is a target channel, a channel sending the P2 and the D2 is an interference channel for the user equipment. The SFN mode may coexist with the SR mode. Referring to FIG. 13, FIG. 13 is a schematic diagram of signal transmission when the SFN mode coexists with the SR mode in this embodiment of the present invention. Ior0 is common total signal transmit power of the Portion 1 and the Portion 2, Ior1 is independent signal transmit power of the Portion 1, and Ior2 is independent signal transmit power of the Portion 2. In a scenario in which the two modes coexist with each other, for a total Ec/Ior of a pilot channel, Ec refers to energy per chip of the pilot channel; the total Ior needs to be analyzed with reference to states of the Portion 1 and the Portion 2, and for different pilot channels, the total Ior may be total transmit power of an antenna beam corresponding to the pilot channel, that is, for the Portion 1 shown in FIG. 13, the total Ior is Ior0/2+Ior1, and for the Portion 2, the total Ior is Ior0/2+Ior2; the total Ior may also be total power of same signals that are sent by different beams sharing scrambling code, that is Ior0, or may also be total power of independent signals that are separately sent by different beams sharing scrambling code, that is, for the Portion 1, the total Ior is Ior1, and for the Portion 2, the total Ior is Ior2.

The sending unit 700 is specifically configured to:
deliver the Ec/Ior information according to a preset period; or
when a difference between the real-time Ec/Ior value of the pilot channel and a real-time Ec/Ior value that is obtained when the Ec/Ior information is previously delivered reaches a preset difference, deliver the Ec/Ior information; or
deliver the Ec/Ior information according to a preset period, and if a difference between the real-time Ec/Ior value of the pilot channel and a real-time Ec/Ior value that is obtained when the Ec/Ior information is previously delivered reaches a preset difference within one preset period, deliver the Ec/Ior information.

After obtaining the real-time Ec/Ior value of the first-type pilot channel and the real-time Ec/Ior value of the second-type pilot channel, the user equipment may calculate a balancing coefficient according to the accurate real-time values, to implement well compensation for a data channel corresponding to the pilot channel.

Certainly, it should be noted that, during delivery of the Ec/Ior information, the Ec/Ior information may be directly acquired and delivered by a base station, or may also be acquired by a base station and reported to an RNC, and then, delivered by the RNC. If the first-type pilot channel and the second-type pilot channel come from a same base station, the base station may directly acquire the Ec/Ior information of two channels and report the Ec/Ior information to the RNC; or if the first-type pilot channel and the second-type pilot channel come from different base stations, two base stations need to separately acquire the Ec/Ior information of both the first-type pilot channel and the second-type pilot channel, and report the Ec/Ior information to the RNC, and then, the RNC delivers the Ec/Ior information to the user equipment.

The Ec/Ior information may include an absolute real-time Ec/Ior value of the pilot channel, where the absolute real-time Ec/Ior value is an absolute value of the real-time Ec/Ior value; or
the Ec/Ior information includes an initial Ec/Ior value of the pilot channel and a relative Ec/Ior value of the pilot channel, where the initial Ec/Ior value is an absolute value, and the relative Ec/Ior value is a value of the real-time Ec/Ior value relative to the corresponding initial Ec/Ior value; or
the Ec/Ior information includes a relative Ec/Ior value of the pilot channel, where the relative Ec/Ior value is a value of the real-time Ec/Ior value relative to a corresponding initial Ec/Ior value, and the initial Ec/Ior value is configured by the radio network controller and is delivered to the user equipment; or
the Ec/Ior information includes a real-time Ec/Ior value of a primary common pilot channel and an offset value between a secondary common pilot channel and the corresponding primary common pilot channel, where the real-time Ec/Ior value of the primary common pilot channel is an absolute value or a relative value corresponding to an initial Ec/Ior value of the primary common pilot channel, and the offset value remains unchanged.

The sending unit 700 is specifically configured to:
deliver the absolute real-time Ec/Ior value to the user equipment, where
the absolute real-time Ec/Ior value is an absolute value of the real-time Ec/Ior value, and the absolute real-time Ec/Ior value includes an absolute real-time Ec/Ior value of the first-type pilot channel and an absolute real-time Ec/Ior value of the second-type pilot channel; or
deliver the initial Ec/Ior value to the user equipment, and deliver the relative Ec/Ior value to the user equipment.

The initial Ec/Ior value includes an initial Ec/Ior value of the first-type pilot channel and an initial Ec/Ior value of the second-type pilot channel, the initial Ec/Ior value is an absolute value, the relative Ec/Ior value is a value of the real-time Ec/Ior value relative to the corresponding initial Ec/Ior value, and the relative Ec/Ior value includes a relative Ec/Ior value of the first-type pilot channel and a relative Ec/Ior value of the second-type pilot channel. Certainly, only a relative Ec/Ior value may be delivered, and the initial Ec/Ior value is configured by the radio network controller and is delivered to the user equipment; or
the real-time Ec/Ior value of the primary common pilot channel and the offset value are delivered to the user equipment.

When the first-type pilot channel and the second-type pilot channel separately include a corresponding primary common pilot channel and secondary common pilot channel, where the offset value is an offset value between the secondary common pilot channel and the corresponding primary common pilot channel, the offset value includes an offset of the first-type pilot channel and an offset value of the second-type pilot channel, the real-time Ec/Ior value of the primary common pilot channel includes a real-time Ec/Ior value of the primary common pilot channel of the first-type pilot channel and a real-time Ec/Ior value of the primary common pilot channel of the second-type pilot channel, and the real-time Ec/Ior value of the primary common pilot channel is an absolute value or a relative value corresponding to the initial Ec/Ior value of the primary common pilot channel, the offset value remains unchanged, so that the user equipment calculates a real-time Ec/Ior value of the secondary common pilot channel of the first-type pilot channel and a real-time Ec/Ior value of the secondary common pilot channel of the second-type pilot channel according to the offset value.

It should be noted that, the offset value may be an offset value between an initial Ec/Ior value of the secondary common pilot channel and the initial Ec/Ior value of the corresponding primary common pilot channel, or may also be an offset value between a real-time Ec/Ior value of the secondary common pilot channel at a moment and a real-time Ec/Ior value of the corresponding primary common pilot channel, as long as it is ensured that the user equipment can obtain an accurate real-time Ec/Ior value of the secondary common pilot channel through calculation according to the offset value included in the Ec/Ior information. A manner of an offset value is used for delivery, as long as delivery is performed when the offset value changes. In this way, a real-time Ec/Ior value of the secondary common pilot channel at a moment may be obtained subsequently. Specifically, when the offset value remains unchanged, the offset value needs to be delivered only once. When the offset value changes according to the requirements of the base station, delivery needs to be performed only once again when the offset value changes. Compared with high-frequency real-time delivery, a manner of delivery by using an offset value can reduce a quantity of times of delivery of Ec/Ior information, thereby reducing signaling overheads and saving channel resources.

When delivery of the Ec/Ior information is completed, the user equipment may read the absolute real-time Ec/Ior value from the Ec/Ior information and use the absolute real-time Ec/Ior value as the real-time Ec/Ior value; or
read the relative Ec/Ior value and the initial Ec/Ior value from the Ec/Ior information, and add the relative Ec/Ior value and the initial Ec/Ior value to obtain the real-time Ec/Ior value; or
read the relative Ec/Ior value from the Ec/Ior information, receive the initial Ec/Ior value from the radio network controller, and add the relative Ec/Ior value and the initial Ec/Ior value to obtain the real-time Ec/Ior value; or
read the real-time Ec/Ior value of the primary common pilot channel in the pilot channel and the offset value from the Ec/Ior information, and add the real-time Ec/Ior value of the primary common pilot channel and the corresponding offset value to obtain a real-time Ec/Ior value of the secondary common pilot channel.

Then, a balancing coefficient is calculated according to obtained real-time Ec/Ior values of a target channel and an interference channel, to implement compensation for a data channel corresponding to the pilot channel.

This embodiment is described by using a primary common pilot channel and a corresponding secondary common pilot channel. However, in some scenarios, the primary common pilot channel may also correspond to a demodulation common pilot or a dedicated pilot used in a cell portion described in this embodiment of the present invention. In a case in which there is no interference channel, manners of acquiring and delivering Ec/Ior information of a first-type pilot channel are similar to manners described in this embodiment, and no further details are described herein again.

It should be noted that the embodiments in this specification are all described in a progressive manner. Description of each of the embodiments focuses on differences from other embodiments, and reference may be made to each other for the same or similar parts among the embodiments. The apparatus embodiments are substantially similar to the method embodiments and therefore are only briefly described, and reference may be made to the method embodiments for the related part.

By means of the foregoing embodiment, the present invention has the following advantages:

Ec/Ior information including Ec/Ior information of a pilot channel is directly delivered to user equipment, so that the user equipment can acquire an accurate real-time Ec/Ior value of the channel from the Ec/Ior information. In this way, when the user equipment calculates a balancing coefficient, accuracy is relatively high, so that the user equipment can well compensate for, according to the accurate balancing coefficient, a data channel corresponding to the pilot channel, thereby improving performance of the user equipment in receiving a signal.

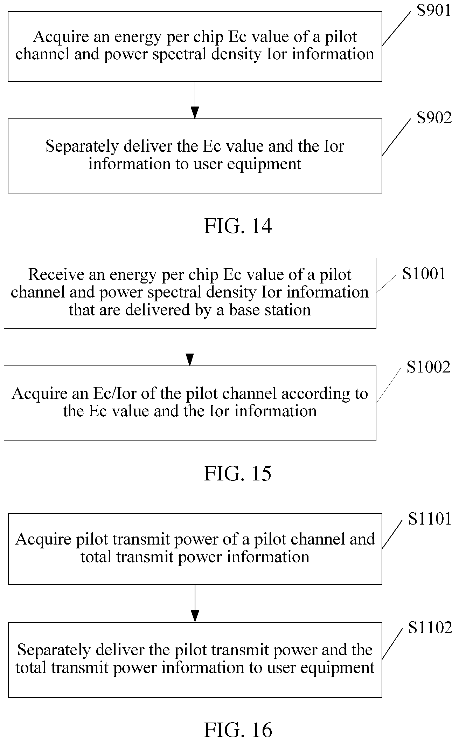

As shown in FIG. 14, the present invention further provides an embodiment of an information transmission method. The method includes:
S901: A base station acquires power spectral density Ior information, and an energy per chip Ec value of a pilot channel.

It should be noted that, the power spectral density Ior information is Ior information of all desired signals in the base station, and the Ec value is energy per chip of the pilot channel used as a target channel.

S902: The base station separately delivers the Ec value and the Ior information to user equipment, so that the user equipment acquires a current ratio of energy per chip to power spectral density Ec/Ior of the pilot channel according to the Ec value and the Ior information.

The Ec value is delivered to the user equipment in a constant manner. It should be noted that the constant herein only refers to that a delivery frequency of the Ec value changes slowly compared with that of the Ior information and may be considered to be constant within a time period, but is not limited to that the Ec value itself is constant. The base station may determine the Ec value according to a current channel state.

In this embodiment, the Ior information includes an Ior absolute numerical value, where the absolute Ior numerical value is an absolute numerical value of a current Ior value, in short, the user equipment may directly use the absolute Ior numerical value delivered by the base station as the current Ior value; or
the Ior information includes a nominal Ior value and an relative Ior numerical value, where the nominal Ior value is an absolute numerical value, the relative Ior numerical value is a value of a current Ior value relative to the corresponding nominal Ior value; it should be noted that the nominal Ior value herein is equivalent to an initial value and the relative Ior numerical value is a relative difference between the current Ior value and the initial value; further, the base station may deliver multiple groups of nominal Ior values, for example, a nominal Ior value of the base station and a nominal Ior value of an adjacent base station of the base station; therefore, for the pilot channel used as the target channel, there is a correspondence between a nominal Ior value and an relative Ior numerical value of the target base station; or
the Ior information includes an relative Ior numerical value; it should be noted that, in this implementation manner, a nominal Ior value corresponding to the pilot channel may be directly delivered to the user equipment by a core network by means of higher-layer signaling, for example, may be directly acquired and delivered to the user equipment by the radio network controller.

It needs to be emphasized that, content of the Ior information includes but is not limited to the foregoing three types as long as the Ior information delivered in this embodiment can determine a current Ior value, and any simple replacement or variation made based on the idea of the embodiments belongs to the protection scope of the present invention.

In this embodiment, further, the pilot channel includes a first-type pilot channel and/or a second-type pilot channel, where the first-type pilot channel is a downlink pilot channel between the base station and the user equipment, the second-type pilot channel is a downlink pilot channel causing interference to a signal sent by the first-type pilot channel, and the second-type pilot channel comes from the base station or the adjacent base station of the base station.

Further, if the first-type pilot channel comes from the base station and the second-type pilot channel comes from the adjacent base station of the base station, the base station establishes a data path to the adjacent base station to acquire Ior information of the second-type pilot channel; or the base station receives Ior information of the second-type pilot channel delivered by the radio network controller, where the Ior information of the second-type pilot channel is reported by the adjacent base station of the base station to the radio network controller.

In this embodiment, a base station delivers an Ec value of a pilot channel and Ior information to user equipment, so that the user equipment may acquire in real time a current Ec/Ior value of the pilot channel according to the delivered Ec value and Ior information, and perform calculation such as channel balancing according to the current Ec/Ior; therefore, compared with the prior art that one predetermined Ec/Ior value is used to calculate a balancing coefficient, calculation accuracy is improved, and performance of the user equipment in receiving a target signal is improved.

As shown in FIG. 15, the present invention provides an embodiment of an information acquiring method, used to acquire a ratio of energy per chip to power spectral density Ec/Ior of a pilot channel. The method includes:
S1001: User equipment receives an energy per chip Ec value of a pilot channel and power spectral density Ior information that are delivered by a base station.
S1002: The user equipment acquires an Ec/Ior of the pilot channel according to the Ec value and the Ior information.

In this embodiment, step S1002 specifically includes: acquiring the Ec value; acquiring a current Ior value according to the Ior information; and calculating a ratio of the Ec value to the Ior value, to obtain the Ec/Ior of the pilot channel, where the Ec value is delivered by the base station in a constant manner, the constant herein only refers to that a delivery frequency of the Ec value changes slowly compared with that of the Ior information and may be considered to be constant within a time period, but is not limited to that the Ec value itself is constant. According to different channel environments, the delivered Ec values may be different. The Ior value is obtained through calculation according to the Ior information delivered by the base station.

Further, the acquiring a current Ior value according to the Ior information includes:
if the Ior information includes an Ior absolute numerical value, using the absolute Ior numerical value as the current Ior value;
if the Ior information includes a nominal Ior value and an relative Ior numerical value, using a sum of the nominal Ior value and the relative Ior numerical value as the current Ior value; or
if the Ior information includes an relative Ior numerical value, acquiring a corresponding nominal Ior value by using a radio network controller RNC, and using a sum of the nominal Ior value and the relative Ior numerical value as the current Ior value.

It should be noted that, the pilot channel in this embodiment includes a first-type pilot channel and/or a second-type pilot channel, where the first-type pilot channel is a downlink pilot channel between the base station and the user equipment, the second-type pilot channel is a downlink pilot channel causing interference to a signal sent by the first-type pilot channel, and the second-type pilot channel comes from the base station or an adjacent base station of the base station.

In this embodiment, user equipment may obtain a current Ec/Ior value of a pilot channel by using an Ec value and Ior information that are delivered by a base station, and calculate a balancing coefficient according to the obtained Ec/Ior value, which improves accuracy and improves performance of the user equipment in receiving a target signal.

As shown in FIG. 16, the present invention further provides an embodiment of an information transmission method. The method includes:
S1101: A network side acquires pilot transmit power of a pilot channel and total transmit power information.

It should be noted that, the pilot transmit power of the pilot channel acquired by the network side refers to pilot transmit power of one or more pilot channels that are selected according to requirements of calculating an Ec/Ior. Actually, the network side may acquire pilot transmit power of multiple pilot channels, and send the pilot transmit power to the user equipment, so that the user equipment performs an operation related to each pilot channel; the pilot channel involved in this embodiment refers to some pilot channels among the multiple pilot channels; the total transmit power acquired by the network side refers to total transmit power used to send a signal by a base station corresponding to the some pilot channels.

Further, in this embodiment, the network side may acquire the total transmit power information by using a current serving base station, and acquire the pilot transmit power of the pilot channel by using the radio network controller, where the pilot channel and the total transmit power information correspond to a same base station on the network side; or, the network side may acquire the pilot transmit power of the pilot channel and the corresponding total transmit power information by using the radio network controller, and the pilot transmit power and the total transmit power information may be reported by a corresponding base station to the radio network controller.

In addition, it should be noted that, for information about total transmit power used to send a signal by a base station in this embodiment, using a base station NodeB on the network side as an example, multiple cells (cell) in one base station may be relevant to the user equipment UE, and the total transmit power information of the base station may be information about total transmit power of multiple cells, or may also be total transmit power of each cell among the multiple cells.

S1102: The network side separately delivers the pilot transmit power and the total transmit power information to user equipment, so that the user equipment acquires a ratio of energy per chip to power spectral density Ec/Ior of the pilot channel of the pilot channel according to the pilot transmit power and the total transmit power information. It should be noted that, if there are multiple pilot channels, the network side delivers pilot transmit power corresponding to the multiple pilot channels and the total transmit power information, so that the user equipment separately calculates an Ec/Ior of each pilot channel.

In this embodiment, for the sent pilot transmit power of the pilot channel, reference may be made to CPICH_Tx_Power delivered in the 3GPP protocol, where the Tx_Power represents transmit power. Certainly, a common pilot channel CPICH is only an example, and is not used to limit the pilot channel in the present invention. A person skilled in the art should know that, according to protocol evolution, a new channel may be defined to replace the CPICH, as long as the pilot channel is used as a reference for the user equipment to calculate the Ec/Ior. Any simple replacement and variation made based on the idea of the embodiments of the present invention belongs to the protection scope of the present invention.

It should be noted that, the sent total transmit power information includes:
a total transmit power absolute numerical value, where the total transmit power absolute numerical value is an absolute numerical value of current total transmit power, and in short, the user equipment may directly use the total transmit power absolute numerical value delivered by the base station as a value of the current total transmit power; or
a total transmit power nominal value and a total transmit power relative numerical value, where the total transmit power nominal value may be considered as an absolute numerical value, the total transmit power relative numerical value is a value of current total transmit power relative to the corresponding total transmit power nominal value; it should be noted that, the total transmit power nominal value is equivalent to an initial value, while the current total transmit power is a real-time value, and there is a relative offset between the real-time value and the initial value; therefore, the total transmit power relative numerical value is a relative difference between the value of the current total transmit power and the initial value, and further, the base station may deliver multiple groups of total transmit power nominal values, for example, the multiple groups of total transmit power nominal values may include a total transmit power nominal value of the base station and a total transmit power nominal value of an adjacent base station; therefore, for a pilot channel of the target channel that is selected by the user equipment for calculating an Ec/Ior, there is a correspondence between the a total transmit power nominal value and a total transmit power relative numerical value of the pilot channel; or
the total transmit power information includes a total transmit power relative numerical value; it should be noted that, in this implementation manner, a total transmit power nominal value corresponding to the pilot channel may be directly delivered to the user equipment by a core network by means of higher-layer signaling, for example, may be directly acquired and delivered to the user equipment by the radio network controller RNC.

It needs to be emphasized that, content of the total transmit power information includes but is not limited to the foregoing three types as long as the total transmit power information delivered in this embodiment can determine a current total transmit power (Total_Tx_Power) value, and any simple replacement or variation made based on the idea of the embodiments belongs to the protection scope of the present invention.

In this embodiment, further, the pilot channel includes a first-type pilot channel and/or a second-type pilot channel, where the first-type pilot channel is a downlink pilot channel between a first base station and the user equipment, the second-type pilot channel is a downlink pilot channel causing interference to a signal sent by the first-type pilot channel, the second-type pilot channel comes from the first base station or a second base station adjacent to the first base station, and the first base station is a current serving base station. It should be noted that, the user equipment may calculate Ec/Iors of the first-type pilot channel and the second-type pilot channel according to total transmit power separately corresponding to the first-type pilot channel and the second-type pilot channel, and pilot transmit power of the first-type pilot channel and the second-type pilot channel, where the Ec/Ior of the first-type pilot channel may be used for balancing calculation; because the second-type pilot channel is an interference channel of the first-type pilot channel, the Ec/Ior of the second-type pilot channel may be used for interference cancellation.

Further, if the pilot channel includes the first-type pilot channel and/or the second-type pilot channel and both the first-type pilot channel and the second-type pilot channel are downlink pilot channels between the first base station and the user equipment, the acquiring, by a network side, total transmit power information includes: acquiring, by the network side, total transmit power information of the first base station.

Further, if the pilot channel includes the first-type pilot channel and the second-type pilot channel, the first-type pilot channel comes from the first base station, and the second-type pilot channel comes from the second base station, the acquiring, by a network side, total transmit power information includes: separately acquiring, by the network side, total transmit power information of the first base station and total transmit power information of the second base station.

Further, if the pilot channel includes the second-type pilot channel and the second-type pilot channel comes from the second base station, the acquiring, by a network side, total transmit power information includes:
establishing, by the network side, a data path to the second base station by using the first base station, to acquire total transmit power information of the second base station; or
receiving, by the network side by using the first base station, total transmit power information of the second base station delivered by the radio network controller, where the total transmit power information of the second base station is reported by the second base station to the radio network controller; or
acquiring, by the network side, total transmit power information of the second base station by using the radio network controller.

In this embodiment, a base station delivers pilot transmit power of a pilot channel and total transmit power information to user equipment, so that the user equipment may acquire a value of current total transmit power (Total_Tx_Power) according to the delivered total transmit power information; calculate a ratio (for example, CPICH_Tx_Power/ Total_Tx_Power) by using a value of the pilot transmit power (for example, CPICH_Tx_Power) and a value of the total transmit power (Total_Tx_Power), where the ratio is equal to a current Ec/Ior value of the pilot channel, and then, perform calculation such as channel balancing according to the current Ec/Ior; therefore, compared with the prior art that one predetermined Ec/Ior value is used to calculate a balancing coefficient, calculation accuracy is improved, and performance of the user equipment in receiving a target signal is improved.

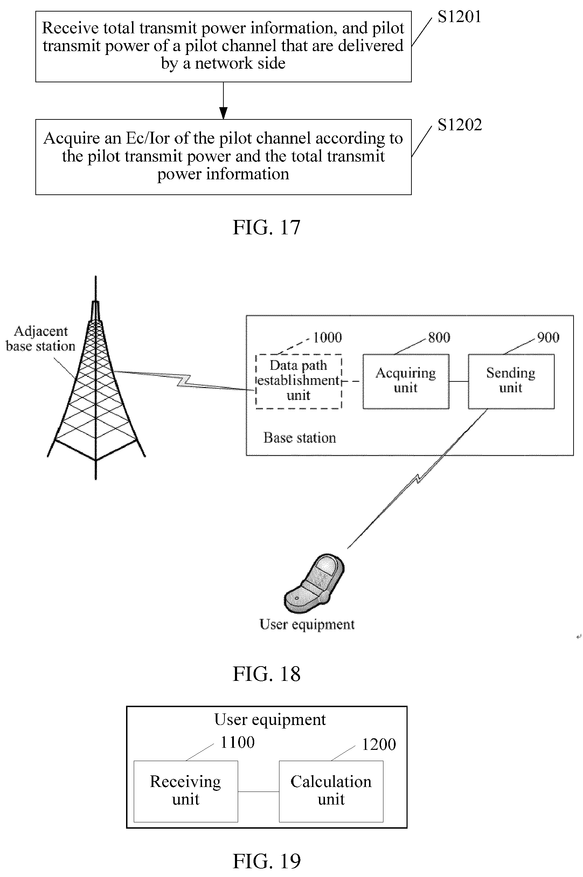

As shown in FIG. 17, the present invention provides an embodiment of an information acquiring method, used to acquire a ratio of energy per chip to power spectral density Ec/Ior of a pilot channel. The method includes:
S1201: User equipment receives total transmit power information, and pilot transmit power of a pilot channel that are delivered by a network side.

It should be noted that, the total transmit power herein refers to total power used to send a signal by a base station.

S1202: The user equipment acquires an Ec/Ior of the pilot channel according to the pilot transmit power and the total transmit power information, where the total transmit power information and the pilot channel correspond to a same base station on the network side; it should be supplementarily noted that, the user equipment may calculate the Ec/Ior of the pilot channel according to the pilot transmit power of the pilot channel and total transmit power of a base station corresponding to the pilot channel.

In this embodiment, step S1202 specifically includes:
acquiring the pilot transmit power;
acquiring current total transmit power according to the total transmit power information; and
calculating a ratio of the pilot transmit power to the total transmit power, to obtain the Ec/Ior of the pilot channel.

Further, the acquiring current total transmit power according to the total transmit power information includes:
if the total transmit power information includes a total transmit power absolute numerical value, using the total transmit power absolute numerical value as the current total transmit power;
if the total transmit power information includes a total transmit power nominal value and a total transmit power relative numerical value, using a sum of the total transmit power nominal value and the total transmit power relative numerical value as the current total transmit power; or
if the total transmit power information includes a total transmit power relative numerical value, acquiring a corresponding total transmit power nominal value by using a radio network controller RNC, and using a sum of the total transmit power nominal value and the total transmit power relative numerical value as the current total transmit power.

It should be noted that, the pilot channel in this embodiment includes a first-type pilot channel and/or a second-type pilot channel, where the first-type pilot channel is a downlink pilot channel between the base station and the user equipment, the second-type pilot channel is a downlink pilot channel causing interference to a signal sent by the first-type pilot channel, and the second-type pilot channel comes from the base station or an adjacent base station of the base station; correspondingly, the user equipment may separately calculate Ec/Iors of the first-type pilot channel and the second-type pilot channel. Because the second-type pilot channel causes interference to the first-type pilot channel, the user equipment may perform interference cancellation according to the Ec/Ior of the second-type pilot channel.

In this embodiment, user equipment may obtain, according to pilot transmit power and total transmit power information that are delivered by a base station, a ratio of current pilot transmit power of a pilot channel to total transmit power, where the ratio of the pilot transmit power to the total transmit power is equal to a current Ec/Ior value of the pilot channel; then, the user equipment calculates a balancing coefficient according to the obtained Ec/Ior value, which improves accuracy and improves performance of the user equipment in receiving a target signal.

As shown in FIG. 18, an embodiment of the present invention further provides a base station. The base station includes:
an acquiring unit 800, configured to acquire power spectral density Ior information, and an energy per chip Ec value of a pilot channel; and
a sending unit 900, configured to deliver the Ec value and the Ior information to user equipment.

The Ior information includes:
an Ior absolute numerical value, where the absolute Ior numerical value is an absolute numerical value of current Ior; or
a nominal Ior value and an relative Ior numerical value, where the nominal Ior value is an absolute numerical value, and the relative Ior numerical value is a value of a current Ior value relative to the corresponding nominal Ior value; or
the Ior information includes an relative Ior numerical value.

In this embodiment, the pilot channel includes a first-type pilot channel and/or a second-type pilot channel, where the first-type pilot channel is a downlink pilot channel between the base station and the user equipment, the second-type pilot channel is a downlink pilot channel causing interference to a signal sent by the first-type pilot channel, the second-type pilot channel comes from the base station or an adjacent base station of the base station. It should be noted that, the user equipment may calculate Ec/Iors of the first-type pilot channel and the second-type pilot channel according to Ior values currently separately corresponding to the first-type pilot channel and the second-type pilot channel, and Ec values of the first-type pilot channel and the second-type pilot channel, where the Ec/Ior of the first-type pilot channel may be used for balancing calculation; because the second-type pilot channel is an interference channel of the first-type pilot channel, the Ec/Ior of the second-type pilot channel may be used for interference cancellation.

Further, if the first-type pilot channel comes from the base station and the second-type pilot channel comes from an adjacent base station of the base station,
the base station further includes a data path establishment unit 1000, configured to establish a data path between the base station and the adjacent base station, to acquire Ior information of the second-type pilot channel; or the acquiring unit 1100 is further configured to receive Ior information of the second-type pilot channel delivered by the radio network controller, where the Ior information of the second-type pilot channel is reported by the adjacent base station of the base station to the radio network controller.

In this embodiment, a base station delivers an Ec value of a pilot channel and Ior information to user equipment, so that the user equipment may acquire in real time a current Ec/Ior value of the pilot channel according to the delivered Ec value and Ior information, and perform calculation such as channel balancing according to the current Ec/Ior; therefore, compared with the prior art that one predetermined Ec/Ior value is used to calculate a balancing coefficient, calculation accuracy is improved, and performance of the user equipment in receiving a target signal is improved.

As shown in FIG. 19, an embodiment of the present invention provides user equipment, configured to acquire a ratio of energy per chip to power spectral density Ec/Ior of a pilot channel, and including:
a receiving 1100, configured to receive power spectral density Ior information, and an energy per chip Ec value of a pilot channel that are delivered by a base station; and
a calculation unit 1200, configured to acquire an Ec/Ior of the pilot channel according to the Ec value and the Ior information.

In this embodiment, the calculation unit 1200 is specifically configured to acquire the Ec value; acquire a current Ior value according to the Ior information; and calculate a ratio of the Ec value to the Ior value, to obtain the Ec/Ior of the pilot channel.

Further, if the Ior information includes an Ior absolute numerical value, the calculation unit 1200 is specifically configured to use the absolute Ior numerical value as the current Ior value; or if the Ior information includes a nominal Ior value and an relative Ior numerical value, the calculation unit 1200 is specifically configured to use a sum of the nominal Ior value and the relative Ior numerical value as the current Ior value; or if the Ior information includes an relative Ior numerical value, the receiving unit 1100 is further configured to acquire a corresponding nominal Ior value by using the radio network controller RNC, and the calculation unit 1200 is specifically configured to use a sum of the nominal Ior value and the relative Ior numerical value as the current Ior value.

The pilot channel includes a first-type pilot channel and/or a second-type pilot channel, where the first-type pilot channel is a downlink pilot channel between the base station and the user equipment, the second-type pilot channel is a downlink pilot channel causing interference to a signal sent by the first-type pilot channel, and the second-type pilot channel comes from the base station or an adjacent base station of the base station. It should be noted that, the user equipment may calculate Ec/Iors of the first-type pilot channel and the second-type pilot channel according to Ior values currently separately corresponding to the first-type pilot channel and the second-type pilot channel, and Ec values of the first-type pilot channel and the second-type pilot channel, where the Ec/Ior of the first-type pilot channel may be used for balancing calculation; because the second-type pilot channel is an interference channel of the first-type pilot channel, the Ec/Ior of the second-type pilot channel may be used for interference cancellation.

In this embodiment, user equipment may obtain a current Ec/Ior value of a pilot channel by using an Ec value and Ior information that are delivered by a base station, and calculate a balancing coefficient according to the obtained Ec/Ior value, which improves accuracy and improves performance of the user equipment in receiving a target signal.

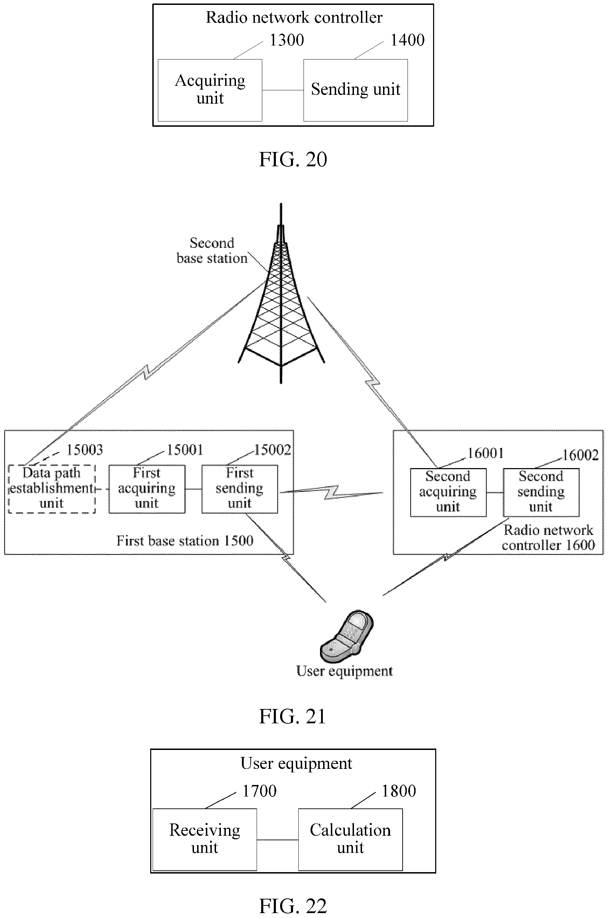

As shown in FIG. 20, an embodiment of the present invention provides a radio network controller. The radio network controller includes:
an acquiring unit 1300, configured to acquire total transmit power information, and pilot transmit power of a pilot channel; and
a sending unit 1400, configured to deliver the pilot transmit power and the total transmit power information to user equipment, so that the user equipment acquires a ratio of energy per chip to power spectral density Ec/Ior of the pilot channel according to the pilot transmit power and the total transmit power information.

The total transmit power information includes a total transmit power absolute numerical value, where the total transmit power absolute numerical value is an absolute numerical value of current total transmit power; or
a total transmit power nominal value and a total transmit power relative numerical value, where the total transmit power nominal value is an absolute numerical value and the total transmit power relative numerical value is a value of current total transmit power relative to the corresponding total transmit power nominal value; or
the total transmit power information includes a total transmit power relative numerical value.

In addition, it should be noted that, for information about total transmit power used to send a signal by a base station in this embodiment, using a base station NodeB on the network side as an example, multiple cells (cell) in one base station may be relevant to the user equipment UE, and the total transmit power information of the base station may be information about total transmit power of multiple cells, or may also be total transmit power of each cell among the multiple cells.

In this embodiment, the pilot channel includes a first-type pilot channel and/or a second-type pilot channel, where the first-type pilot channel is a downlink pilot channel between a first base station and the user equipment, the second-type pilot channel is a downlink pilot channel causing interference to a signal sent by the first-type pilot channel, the second-type pilot channel comes from the first base station or a second base station adjacent to the base station, and the first base station is a current serving base station; correspondingly, the user equipment may separately calculate Ec/Iors of the first-type pilot channel and the second-type pilot channel. Because the second-type pilot channel causes interference to the first-type pilot channel, the user equipment may perform interference cancellation according to the Ec/Ior of the second-type pilot channel.

Further, if the pilot channel includes the first-type pilot channel and/or the second-type pilot channel and both the first-type pilot channel and the second-type pilot channel are downlink pilot channels between the first base station and the user equipment, the acquiring unit 1300 is specifically configured to acquire total transmit power information of the first base station, and pilot transmit power of the first-type pilot channel and/or pilot transmit power of the second-type pilot channel;
if the pilot channel includes the first-type pilot channel and the second-type pilot channel, the first-type pilot channel comes from the first base station, and the second-type pilot channel comes from the second base station, the acquiring unit 1300 is specifically configured to separately acquire total transmit power information of the first base station, total transmit power information of the second base station, pilot transmit power of the first-type pilot channel, and pilot transmit power of the second-type pilot channel; or
if the pilot channel includes the second-type pilot channel and the second-type pilot channel comes from the second base station, the acquiring unit is specifically configured to acquire total transmit power information of the second base station and pilot transmit power of the second-type pilot channel.

In this embodiment, a base station delivers pilot transmit power of a pilot channel and total transmit power information to user equipment, so that the user equipment may acquire a value of current total transmit power according to the delivered total transmit power information; calculate a ratio by using a value of the pilot transmit power and a value of the total transmit power, where the ratio is equal to a current Ec/Ior value of the pilot channel, and then, perform calculation such as channel balancing according to the current Ec/Ior; therefore, compared with the prior art that one predetermined Ec/Ior value is used to calculate a balancing coefficient, calculation accuracy is improved, and performance of the user equipment in receiving a target signal is improved.

As shown in FIG. 21, an embodiment of the present invention further provides a network side device. The network side device includes a first base station 1500 and a radio network controller 1600.

The first base station includes a first acquiring unit 15001, configured to acquire total transmit power information; and a first sending unit 15002, configured to deliver the total transmit power information to user equipment, where the first base station 1500 is a current serving base station of the user equipment.

The radio network controller 1600 includes a second acquiring unit 16001, configured to acquire pilot transmit power of a pilot channel; and a second sending unit 16002, configured to deliver the pilot transmit power to the user equipment.

The total transmit power information includes a total transmit power absolute numerical value, where the total transmit power absolute numerical value is an absolute numerical value of current total transmit power; or
a total transmit power nominal value and a total transmit power relative numerical value, where the total transmit power nominal value is an absolute numerical value and the total transmit power relative numerical value is a value of current total transmit power relative to the corresponding total transmit power nominal value; or
the total transmit power information includes a total transmit power relative numerical value.

In addition, it should be noted that, for information about total transmit power used to send a signal by a base station in this embodiment, using a base station NodeB on the network side as an example, multiple cells (cell) in one base station may be relevant to the user equipment UE, and the total transmit power information of the base station may be information about total transmit power of multiple cells, or may also be total transmit power of each cell among the multiple cells.

In this embodiment, the pilot channel includes a first-type pilot channel and/or a second-type pilot channel, where the first-type pilot channel is a downlink pilot channel between a first base station and the user equipment, the second-type pilot channel is a downlink pilot channel causing interference to a signal sent by the first-type pilot channel, and the second-type pilot channel comes from the first base station or a second base station adjacent to the base station; correspondingly, the user equipment may separately calculate Ec/Iors of the first-type pilot channel and the second-type pilot channel. Because the second-type pilot channel causes interference to the first-type pilot channel, the user equipment may perform interference cancellation according to the Ec/Ior of the second-type pilot channel.

Further, if the pilot channel includes the first-type pilot channel and/or the second-type pilot channel and both the first-type pilot channel and the second-type pilot channel are downlink pilot channels between the first base station and the user equipment, the first acquiring unit 15001 is specifically configured to acquire total transmit power information of the first base station, and the second acquiring unit 16001 is specifically configured to separately acquire pilot transmit power of the first-type pilot channel and pilot transmit power of the second-type pilot channel.

Further, if the pilot channel includes the first-type pilot channel and the second-type pilot channel, the first-type pilot channel comes from the first base station, and the second-type pilot channel comes from the second base station, the first base station further includes a data path establishment unit 15003, configured to establish a data path between the first base station and the second base station, where the first acquiring unit 15001 is specifically configured to acquire total transmit power information of the first base station, and acquire, by using the data path, total transmit power information of the second base station, and the second acquiring unit 16001 is specifically configured to separately acquire pilot transmit power of the first-type pilot channel and pilot transmit power of the second-type pilot channel.

Further, if the pilot channel includes the second-type pilot channel and the second-type pilot channel comes from the second base station, the base station further includes a data path establishment unit 15003, configured to establish a data path between the first base station and the second base station, where the first acquiring unit 15001 is specifically configured to acquire total transmit power information of the second base station by using the data path, and the second acquiring unit 16001 is specifically configured to acquire pilot transmit power of the second-type pilot channel; or
the first acquiring unit 15001 is specifically configured to acquire total transmit power information of the second base station by using the radio network controller, where the total transmit power information of the second base station is reported by the second base station to the radio network controller; and the second acquiring unit 16001 is specifically configured to acquire the pilot transmit power of the second-type pilot channel.

In this embodiment, a base station delivers pilot transmit power of a pilot channel and total transmit power information to user equipment, so that the user equipment may acquire a value of current total transmit power according to the delivered total transmit power information; calculate a ratio by using a value of the pilot transmit power and a value of the total transmit power, where the ratio is equal to a current Ec/Ior value of the pilot channel, and then, perform calculation such as channel balancing according to the current Ec/Ior; therefore, compared with the prior art that one predetermined Ec/Ior value is used to calculate a balancing coefficient, calculation accuracy is improved, and performance of the user equipment in receiving a target signal is improved.

As shown in FIG. 22, an embodiment of the present invention provides user equipment, configured to acquire a ratio of energy per chip to power spectral density Ec/Ior of a pilot channel, and including:
a receiving unit 1700, configured to receive total transmit power information, and pilot transmit power of a pilot channel that are delivered by a network side; and
a calculation unit 1800, configured to acquire an Ec/Ior of the pilot channel according to the pilot transmit power and the total transmit power information, where the total transmit power information and the pilot channel correspond to a same base station on the network side.

In this embodiment, the calculation unit 1800 is specifically configured to acquire the pilot transmit power; acquire current total transmit power according to the total transmit power information; and calculate a ratio of the pilot transmit power to the total transmit power, to obtain the Ec/Ior of the pilot channel.

Further, if the total transmit power information includes a total transmit power absolute numerical value, the calculation unit 1800 is specifically configured to use the total transmit power absolute numerical value as the current total transmit power; or
if the total transmit power information includes a total transmit power nominal value and a total transmit power relative numerical value, the calculation unit 1800 is specifically configured to use a sum of the total transmit power nominal value and the total transmit power relative numerical value as the current total transmit power; or
if the total transmit power information includes a total transmit power relative numerical value, the receiving unit 1700 is further configured to acquire, by using a radio network controller, a total transmit power nominal value corresponding to the total transmit power relative numerical value, and the calculation unit 1800 is configured to use a sum of the total transmit power nominal value and the total transmit power relative numerical value as the current total transmit power.

The pilot channel includes a first-type pilot channel and/or a second-type pilot channel, where the first-type pilot channel is a downlink pilot channel between a first base station and the user equipment, the second-type pilot channel is a downlink pilot channel causing interference to a signal sent by the first-type pilot channel, the second-type pilot channel comes from the first base station or an adjacent base station of the first base station, and the first base station is a current serving base station. It should be noted that, the user equipment may calculate Ec/Iors of the first-type pilot channel and the second-type pilot channel according to total transmit power separately corresponding to the first-type pilot channel and the second-type pilot channel, and pilot transmit power of the first-type pilot channel and the second-type pilot channel, where the Ec/Ior of the first-type pilot channel may be used for balancing calculation; because the second-type pilot channel is an interference channel of the first-type pilot channel, the Ec/Ior of the second-type pilot channel may be used for interference cancellation.

In this embodiment, user equipment may obtain a current Ec/Ior value of a pilot channel by using an Ec value and Ior information that are delivered by a base station, and calculate a balancing coefficient according to the obtained Ec/Ior value; therefore, compared with the prior art that the user equipment obtains an Ec/Ior through estimation, accuracy is improved, and performance of the user equipment in receiving a target signal is improved.

It should be noted that, mutual reference may be made between same or corresponding features in all embodiments of the present invention.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM for short), or a random access memory (Random Access Memory, RAM for short).

What is disclosed above is merely exemplary embodiments of the present invention, and certainly is not intended to limit the protection scope of the present invention. Therefore, equivalent variations made in accordance with the claims of the present invention shall fall within the scope of the present invention.

## Claims

1. An information transmission method, comprising:
acquiring, by a base station, ratio of energy per chip to power spectral density Ec/Ior information of a pilot channel; and
delivering, by the base station, the Ec/Ior information to user equipment, so that the user equipment acquires a real-time Ec/Ior value of the pilot channel according to the Ec/Ior information.

2. The method according to claim 1, wherein the Ec/Ior information comprises an absolute real-time Ec/Ior value of the pilot channel, wherein the absolute real-time Ec/Ior value is an absolute value of the real-time Ec/Ior value; or
the Ec/Ior information comprises an initial Ec/Ior value of the pilot channel and a relative Ec/Ior value of the pilot channel, wherein the initial Ec/Ior value is an absolute value, and the relative Ec/Ior value is a value of the real-time Ec/Ior value relative to the corresponding initial Ec/Ior value; or
the Ec/Ior information comprises a relative Ec/Ior value of the pilot channel, wherein the relative Ec/Ior value is a value of the real-time Ec/Ior value relative to a corresponding initial Ec/Ior value, and the initial Ec/Ior value is configured by a radio network controller and is delivered to the user equipment; or
the Ec/Ior information comprises a real-time Ec/Ior value of a primary common pilot channel and an offset value between a secondary common pilot channel and the corresponding primary common pilot channel, wherein the real-time Ec/Ior value of the primary common pilot channel is an absolute value or a relative value corresponding to an initial Ec/Ior value of the primary common pilot channel, and the offset value remains unchanged.

3. The method according to claim 1 or 2, wherein the pilot channel comprises a first-type pilot channel and/or a second-type pilot channel, wherein the first-type pilot channel is a downlink pilot channel between the base station and the user equipment, the second-type pilot channel is a downlink pilot channel causing interference to a signal sent by the first-type pilot channel, and the second-type pilot channel comes from the base station or an adjacent base station of the base station.

4. The method according to claim 3, wherein if the first-type pilot channel comes from the base station and the second-type pilot channel comes from the adjacent base station of the base station, the base station establishes a data path to the adjacent base station, to acquire Ec/Ior information of the second-type pilot channel; or
receives Ec/Ior information of the second-type pilot channel delivered by the radio network controller, wherein the Ec/Ior information of the second-type pilot channel is reported by the adjacent base station of the base station to the radio network controller.

5. The method according to any one of claims 2 to 4, wherein the delivering, by the base station, the Ec/Ior information to user equipment comprises:
delivering the Ec/Ior information according to a preset period; or
when a difference between the real-time Ec/Ior value of the pilot channel and a real-time Ec/Ior value that is obtained when the Ec/Ior information is previously delivered reaches a preset difference, delivering the Ec/Ior information; or
delivering the Ec/Ior information according to a preset period, and if a difference between the real-time Ec/Ior value of the pilot channel and a real-time Ec/Ior value that is obtained when the Ec/Ior information is previously delivered reaches a preset difference within one preset period, delivering the Ec/Ior information.

6. An information acquiring method, used to acquire a ratio of energy per chip to power spectral density Ec/Ior of a pilot channel, and comprising:
receiving, by user equipment, Ec/Ior information of the pilot channel delivered by a base station; and
acquiring, by the user equipment, a real-time Ec/Ior value of the pilot channel according to the Ec/Ior information.

7. The method according to claim 6, wherein the Ec/Ior information comprises an absolute real-time Ec/Ior value of the pilot channel, wherein the absolute real-time Ec/Ior value is an absolute value of the real-time Ec/Ior value; or
the Ec/Ior information comprises an initial Ec/Ior value of the pilot channel and a relative Ec/Ior value of the pilot channel, wherein the initial Ec/Ior value is an absolute value, and the relative Ec/Ior value is a value of the real-time Ec/Ior value relative to the corresponding initial Ec/Ior value; or
the Ec/Ior information comprises a relative Ec/Ior value of the pilot channel, wherein the relative Ec/Ior value is a value of the real-time Ec/Ior value relative to a corresponding initial Ec/Ior value, and the initial Ec/Ior value is configured by a radio network controller and is delivered to the user equipment; or
the Ec/Ior information comprises a real-time Ec/Ior value of a primary common pilot channel and an offset value between a secondary common pilot channel and the corresponding primary common pilot channel, wherein the real-time Ec/Ior value of the primary common pilot channel is an absolute value or a relative value corresponding to an initial Ec/Ior value of the primary common pilot channel, and the offset value remains unchanged.

8. The method according to claim 7, wherein the acquiring, by the user equipment, a real-time Ec/Ior value of the pilot channel according to the Ec/Ior information comprises:
reading the absolute real-time Ec/Ior value from the Ec/Ior information, and using the absolute real-time Ec/Ior value as the real-time Ec/Ior value; or
reading the relative Ec/Ior value and the initial Ec/Ior value from the Ec/Ior information, and adding the relative Ec/Ior value and the initial Ec/Ior value to obtain the real-time Ec/Ior value; or
reading the relative Ec/Ior value from the Ec/Ior information, receiving the initial Ec/Ior value from the radio network controller, and adding the relative Ec/Ior value and the initial Ec/Ior value to obtain the real-time Ec/Ior value; or
reading the real-time Ec/Ior value of the primary common pilot channel in the pilot channel and the offset value from the Ec/Ior information, and adding the real-time Ec/Ior value of the primary common pilot channel and the corresponding offset value to obtain a real-time Ec/Ior value of the secondary common pilot channel.

9. The method according to any one of claims 6 to 8, wherein the pilot channel comprises a first-type pilot channel and/or a second-type pilot channel, wherein the first-type pilot channel is a downlink pilot channel between the base station and the user equipment, the second-type pilot channel is a downlink pilot channel causing interference to a signal sent by the first-type pilot channel, and the second-type pilot channel comes from the base station or an adjacent base station of the base station.

10. An information transmission method, comprising:
acquiring, by a radio network controller, ratio of energy per chip to power spectral density Ec/Ior information of a pilot channel; and
delivering, by the radio network controller, the Ec/Ior information to user equipment, so that the user equipment acquires a real-time Ec/Ior value of the pilot channel according to the Ec/Ior information.

11. The method according to claim 10, wherein the Ec/Ior information comprises an absolute real-time Ec/Ior value of the pilot channel, wherein the absolute real-time Ec/Ior value is an absolute value of the real-time Ec/Ior value; or
the Ec/Ior information comprises an initial Ec/Ior value of the pilot channel and a relative Ec/Ior value of the pilot channel, wherein the initial Ec/Ior value is an absolute value, and the relative Ec/Ior value is a value of the real-time Ec/Ior value relative to the corresponding initial Ec/Ior value; or
the Ec/Ior information comprises a relative Ec/Ior value of the pilot channel, wherein the relative Ec/Ior value is a value of the real-time Ec/Ior value relative to a corresponding initial Ec/Ior value, and the initial Ec/Ior value is acquired by a base station from the radio network controller and is delivered to the user equipment; or
the Ec/Ior information comprises a real-time Ec/Ior value of a primary common pilot channel and an offset value between a secondary common pilot channel and the corresponding primary common pilot channel, wherein the real-time Ec/Ior value of the primary common pilot channel is an absolute value or a relative value corresponding to an initial Ec/Ior value of the primary common pilot channel, and the offset value remains unchanged.

12. The method according to claim 10 or 11, wherein the pilot channel comprises a first-type pilot channel and/or a second-type pilot channel, wherein the first-type pilot channel is a downlink pilot channel between the base station and the user equipment, the second-type pilot channel is a downlink pilot channel causing interference to a signal sent by the first-type pilot channel, and the second-type pilot channel comes from the base station or an adjacent base station of the base station.

13. The method according to claim 12, wherein if the first-type pilot channel comes from the base station and the second-type pilot channel also comes from the base station, the radio network controller acquires Ec/Ior information of the first-type pilot channel and Ec/Ior information of the second-type pilot channel that are reported by the base station; or
if the first-type pilot channel comes from the base station and the second-type pilot channel comes from the adjacent base station of the base station, the radio network controller acquires Ec/Ior information of the first-type pilot channel reported by the base station, and acquires Ec/Ior information of the second-type pilot channel reported by the adjacent base station of the base station.

14. The method according to any one of claims 11 to 13, wherein the delivering, by the radio network controller, the Ec/Ior information to user equipment comprises:
delivering the Ec/Ior information according to a preset period; or
when a difference between the real-time Ec/Ior value of the pilot channel and a real-time Ec/Ior value that is obtained when the Ec/Ior information is previously delivered reaches a preset difference, delivering the Ec/Ior information; or
delivering the Ec/Ior information according to a preset period, and if a difference between the real-time Ec/Ior value of the pilot channel and a real-time Ec/Ior value that is obtained when the Ec/Ior information is previously delivered reaches a preset difference within one preset period, delivering the Ec/Ior information.

15. A base station, comprising:
an acquiring unit, configured to acquire ratio of energy per chip to power spectral density Ec/Ior information of a pilot channel; and
a sending unit, configured to deliver the Ec/Ior information to user equipment, so that the user equipment acquires a real-time Ec/Ior value of the pilot channel according to the Ec/Ior information.

16. The base station according to claim 15, wherein the Ec/Ior information comprises an absolute real-time Ec/Ior value of the pilot channel, wherein the absolute real-time Ec/Ior value is an absolute value of the real-time Ec/Ior value; or
the Ec/Ior information comprises an initial Ec/Ior value of the pilot channel and a relative Ec/Ior value of the pilot channel, wherein the initial Ec/Ior value is an absolute value, and the relative Ec/Ior value is a value of the real-time Ec/Ior value relative to the corresponding initial Ec/Ior value; or
the Ec/Ior information comprises a relative Ec/Ior value of the pilot channel, wherein the relative Ec/Ior value is a value of the real-time Ec/Ior value relative to a corresponding initial Ec/Ior value, and the initial Ec/Ior value is configured by a radio network controller and is delivered to the user equipment; or
the Ec/Ior information comprises a real-time Ec/Ior value of a primary common pilot channel and an offset value between a secondary common pilot channel and the corresponding primary common pilot channel, wherein the real-time Ec/Ior value of the primary common pilot channel is an absolute value or a relative value corresponding to an initial Ec/Ior value of the primary common pilot channel, and the offset value remains unchanged.

17. The base station according to claim 15 or 16, wherein the pilot channel comprises a first-type pilot channel and/or a second-type pilot channel, wherein the first-type pilot channel is a downlink pilot channel between the base station and the user equipment, the second-type pilot channel is a downlink pilot channel causing interference to a signal sent by the first-type pilot channel, and the second-type pilot channel comes from the base station or an adjacent base station of the base station.

18. The base station according to claim 17, wherein the base station further comprises:
a data path establishment unit, configured to: if the first-type pilot channel comes from the base station and the second-type pilot channel comes from the adjacent base station of the base station, establish, by the data path establishment unit, a data path to the adjacent base station to acquire Ec/Ior information of the second-type pilot channel; or
the acquiring unit is further configured to receive Ec/Ior information of the second-type pilot channel delivered by the radio network controller, wherein the Ec/Ior information of the second-type pilot channel is reported by the adjacent base station of the base station to the radio network controller.

19. The base station according to any one of claims 16 to 18, wherein the sending unit is specifically configured to:
deliver the Ec/Ior information according to a preset period; or
when a difference between the real-time Ec/Ior value of the pilot channel and a real-time Ec/Ior value that is obtained when the Ec/Ior information is previously delivered reaches a preset difference, deliver the Ec/Ior information; or
deliver the Ec/Ior information according to a preset period, and if a difference between the real-time Ec/Ior value of the pilot channel and a real-time Ec/Ior value that is obtained when the Ec/Ior information is previously delivered reaches a preset difference within one preset period, deliver the Ec/Ior information.

20. User equipment, configured to acquire a ratio of energy per chip to power spectral density Ec/Ior of a pilot channel, and comprising:
a receiving unit, configured to receive Ec/Ior information of the pilot channel delivered by a base station; and
a calculation unit, configured to acquire a real-time Ec/Ior value of the pilot channel according to the Ec/Ior information.

21. The user equipment according to claim 20, wherein the Ec/Ior information comprises an absolute real-time Ec/Ior value of the pilot channel, wherein the absolute real-time Ec/Ior value is an absolute value of the real-time Ec/Ior value; or
the Ec/Ior information comprises an initial Ec/Ior value of the pilot channel and a relative Ec/Ior value of the pilot channel, wherein the initial Ec/Ior value is an absolute value, and the relative Ec/Ior value is a value of the real-time Ec/Ior value relative to the corresponding initial Ec/Ior value; or
the Ec/Ior information comprises a relative Ec/Ior value of the pilot channel, wherein the relative Ec/Ior value is a value of the real-time Ec/Ior value relative to a corresponding initial Ec/Ior value, and the initial Ec/Ior value is configured by a radio network controller and is delivered to the user equipment; or
the Ec/Ior information comprises a real-time Ec/Ior value of a primary common pilot channel and an offset value between a secondary common pilot channel and the corresponding primary common pilot channel, wherein the real-time Ec/Ior value of the primary common pilot channel is an absolute value or a relative value corresponding to an initial Ec/Ior value of the primary common pilot channel, and the offset value remains unchanged.

22. The user equipment according to claim 21, wherein the calculation unit is specifically configured to:
read the absolute real-time Ec/Ior value from the Ec/Ior information, and use the absolute real-time Ec/Ior value as the real-time Ec/Ior value; or
read the relative Ec/Ior value and the initial Ec/Ior value from the Ec/Ior information, and add the relative Ec/Ior value and the initial Ec/Ior value to obtain the real-time Ec/Ior value; or
read the relative Ec/Ior value from the Ec/Ior information, receive the initial Ec/Ior value from the radio network controller, and add the relative Ec/Ior value and the initial Ec/Ior value to obtain the real-time Ec/Ior value; or
read the real-time Ec/Ior value of the primary common pilot channel in the pilot channel and the offset value from the Ec/Ior information, and add the real-time Ec/Ior value of the primary common pilot channel and the corresponding offset value to obtain a real-time Ec/Ior value of the secondary common pilot channel.

23. The user equipment according to any one of claims 20 to 22, wherein the pilot channel comprises a first-type pilot channel and/or a second-type pilot channel, wherein the first-type pilot channel is a downlink pilot channel between the base station and the user equipment, the second-type pilot channel is a downlink pilot channel causing interference to a signal sent by the first-type pilot channel, and the second-type pilot channel comes from the base station or an adjacent base station of the base station.

24. A radio network controller, comprising:
an acquiring unit, configured to acquire ratio of energy per chip to power spectral density Ec/Ior information of a pilot channel; and
a sending unit, configured to deliver the Ec/Ior information to user equipment, so that the user equipment acquires a real-time Ec/Ior value of the pilot channel according to the Ec/Ior information.

25. The radio network controller according to claim 24, wherein the Ec/Ior information comprises an absolute real-time Ec/Ior value of the pilot channel, wherein the absolute real-time Ec/Ior value is an absolute value of the real-time Ec/Ior value; or
the Ec/Ior information comprises an initial Ec/Ior value of the pilot channel and a relative Ec/Ior value of the pilot channel, wherein the initial Ec/Ior value is an absolute value, and the relative Ec/Ior value is a value of the real-time Ec/Ior value relative to the corresponding initial Ec/Ior value; or
the Ec/Ior information comprises a relative Ec/Ior value of the pilot channel, wherein the relative Ec/Ior value is a value of the real-time Ec/Ior value relative to a corresponding initial Ec/Ior value, and the initial Ec/Ior value is acquired by a base station from the radio network controller and is delivered to the user equipment; or
the Ec/Ior information comprises a real-time Ec/Ior value of a primary common pilot channel and an offset value between a secondary common pilot channel and the corresponding primary common pilot channel, wherein the real-time Ec/Ior value of the primary common pilot channel is an absolute value or a relative value corresponding to an initial Ec/Ior value of the primary common pilot channel, and the offset value remains unchanged.

26. The radio network controller according to claim 24 or 25, wherein the pilot channel comprises a first-type pilot channel and/or a second-type pilot channel, wherein the first-type pilot channel is a downlink pilot channel between the base station and the user equipment, the second-type pilot channel is a downlink pilot channel causing interference to a signal sent by the first-type pilot channel, and the second-type pilot channel comes from the base station or an adjacent base station of the base station.

27. The radio network controller according to claim 26, wherein the acquiring unit is specifically configured to:
if the first-type pilot channel comes from the base station and the second-type pilot channel also comes from the base station, acquire Ec/Ior information of the first-type pilot channel and Ec/Ior information of the second-type pilot channel that are reported by the base station; or
if the first-type pilot channel comes from the base station and the second-type pilot channel comes from the adjacent base station of the base station, acquire Ec/Ior information of the first-type pilot channel reported by the base station, and acquire Ec/Ior information of the second-type pilot channel reported by the adjacent base station of the base station.

28. The radio network controller according to any one of claims 25 to 27, wherein the sending unit is specifically configured to:
deliver the Ec/Ior information according to a preset period; or
when a difference between the real-time Ec/Ior value of the pilot channel and a real-time Ec/Ior value that is obtained when the Ec/Ior information is previously delivered reaches a preset difference, deliver the Ec/Ior information; or
deliver the Ec/Ior information according to a preset period, and if a difference between the real-time Ec/Ior value of the pilot channel and a real-time Ec/Ior value that is obtained when the Ec/Ior information is previously delivered reaches a preset difference within one preset period, deliver the Ec/Ior information.

29. An information transmission method, comprising:
acquiring, by a base station, power spectral density Ior information, and an energy per chip Ec value of a pilot channel; and
separately delivering, by the base station, the Ec value and the Ior information to user equipment.

30. The method according to claim 29, wherein the Ior information comprises an absolute Ior numerical value, wherein the absolute Ior numerical value is an absolute numerical value of a current Ior value; or
the Ior information comprises a nominal Ior value and an relative Ior numerical value, wherein the relative Ior numerical value is a value of a current Ior value relative to the corresponding nominal Ior value; or
the Ior information comprises an relative Ior numerical value.

31. The method according to claim 29 or 30, wherein the pilot channel comprises a first-type pilot channel and/or a second-type pilot channel, wherein the first-type pilot channel is a downlink pilot channel between the base station and the user equipment, the second-type pilot channel is a downlink pilot channel causing interference to a signal sent by the first-type pilot channel, and the second-type pilot channel comes from the base station or an adjacent base station of the base station.

32. The method according to claim 31, wherein if the first-type pilot channel comes from the base station and the second-type pilot channel comes from the adjacent base station of the base station, the base station establishes a data path to the adjacent base station, to acquire Ior information of the second-type pilot channel; or
receives Ior information of the second-type pilot channel delivered by the radio network controller, wherein the Ior information of the second-type pilot channel is reported by the adjacent base station of the base station to the radio network controller.

33. An information acquiring method, used to acquire a ratio of energy per chip to power spectral density Ec/Ior of a pilot channel, and comprising:
receiving, by user equipment, power spectral density Ior information, and an energy per chip Ec value of a pilot channel that are delivered by a base station; and
acquiring, by the user equipment, an Ec/Ior of the pilot channel according to the Ec value and the Ior information.

34. The method according to claim 33, wherein the acquiring, by the user equipment, the Ec/Ior of the pilot channel according to the Ec value and the Ior information comprises:
acquiring the Ec value;
acquiring a current Ior value according to the Ior information; and
calculating a ratio of the Ec value to the Ior value, to obtain the Ec/Ior of the pilot channel.

35. The method according to claim 34, wherein the acquiring a current Ior value according to the Ior information comprises:
if the Ior information comprises an Ior absolute numerical value, using the absolute Ior numerical value as the current Ior value;
if the Ior information comprises a nominal Ior value and an relative Ior numerical value, using a sum of the nominal Ior value and the relative Ior numerical value as the current Ior value; or
if the Ior information comprises an relative Ior numerical value, acquiring a corresponding nominal Ior value by using a radio network controller, and using a sum of the nominal Ior value and the relative Ior numerical value as the current Ior value.

36. An information transmission method, comprising:
acquiring, by a network side, pilot transmit power of a pilot channel and total transmit power information; and
delivering, by the network side, the pilot transmit power and the total transmit power information to user equipment.

37. The method according to claim 36, wherein the total transmit power information comprises:
a total transmit power absolute numerical value, wherein the total transmit power absolute numerical value is an absolute numerical value of current total transmit power; or
a total transmit power nominal value and a total transmit power relative numerical value, wherein the total transmit power relative numerical value is a value of current total transmit power relative to the corresponding total transmit power nominal value; or
the total transmit power information comprises a total transmit power relative numerical value.

38. The method according to claim 36 or 37, wherein the pilot channel comprises a first-type pilot channel and/or a second-type pilot channel, wherein the first-type pilot channel is a downlink pilot channel between a first base station on the network side and the user equipment, the second-type pilot channel is a downlink pilot channel causing interference to a signal sent by the first-type pilot channel, and the second-type pilot channel comes from the first base station or a second base station adjacent to the first base station, wherein the first base station is a current serving base station.

39. The method according to claim 38, wherein if the pilot channel comprises the first-type pilot channel and/or the second-type pilot channel and both the first-type pilot channel and the second-type pilot channel are downlink pilot channels between the first base station and the user equipment, the acquiring, by a network side, total transmit power information comprises:
acquiring, by the network side, total transmit power information of the first base station.

40. The method according to claim 38, wherein if the pilot channel comprises the first-type pilot channel and the second-type pilot channel, the first-type pilot channel comes from the first base station, and the second-type pilot channel comes from the second base station, the acquiring, by a network side, total transmit power information comprises:
separately acquiring, by the network side, total transmit power information of the first base station and total transmit power information of the second base station.

41. The method according to claim 38, wherein the pilot channel comprises the second-type pilot channel and the second-type pilot channel comes from the second base station, the acquiring, by a network side, total transmit power information comprises:
establishing, by the network side, a data path to the second base station by using the first base station, to acquire total transmit power information of the second base station; or
receiving, by the network side by using the first base station, total transmit power information of the second base station delivered by a radio network controller, wherein the total transmit power information of the second base station is reported by the second base station to the radio network controller; or
acquiring, by the network side, total transmit power information of the second base station by using the radio network controller.

42. An information acquiring method, used to acquire a ratio of energy per chip to power spectral density Ec/Ior of a pilot channel, and comprising:
receiving, by user equipment, total transmit power information, and pilot transmit power of a pilot channel that are delivered by network side; and
acquiring, by the user equipment, the Ec/Ior of the pilot channel according to the pilot transmit power and the total transmit power information.

43. The method according to claim 42, wherein the acquiring, by the user equipment, the Ec/Ior of the pilot channel according to the pilot transmit power and the total transmit power information comprises:
acquiring the pilot transmit power;
acquiring current total transmit power according to the total transmit power information; and
calculating a ratio of the pilot transmit power to the total transmit power, to obtain the Ec/Ior of the pilot channel.

44. The method according to claim 43, wherein the acquiring current total transmit power according to the total transmit power information comprises:
if the total transmit power information comprises a total transmit power absolute numerical value, using the total transmit power absolute numerical value as the current total transmit power;
if the total transmit power information comprises a total transmit power nominal value and a total transmit power relative numerical value, using a sum of the total transmit power nominal value and the total transmit power relative numerical value as the current total transmit power; or
if the total transmit power information comprises a total transmit power relative numerical value, acquiring a corresponding total transmit power nominal value by using a radio network controller, and using a sum of the total transmit power nominal value and the total transmit power relative numerical value as the current total transmit power.

45. A radio network controller, comprising:
an acquiring unit, configured to acquire total transmit power information, and pilot transmit power of a pilot channel; and
a sending unit, configured to deliver the pilot transmit power and the total transmit power information to user equipment.

46. The radio network controller according to claim 45, wherein the total transmit power information comprises:
a total transmit power absolute numerical value, wherein the total transmit power absolute numerical value is an absolute numerical value of current total transmit power;
a total transmit power nominal value and a total transmit power relative numerical value, wherein the total transmit power relative numerical value is a value of current total transmit power relative to the corresponding total transmit power nominal value; or
the total transmit power information comprises a total transmit power relative numerical value.

47. The radio network controller according to claim 45 or 46, wherein the pilot channel comprises a first-type pilot channel and/or a second-type pilot channel, wherein the first-type pilot channel is a downlink pilot channel between a first base station and the user equipment, the second-type pilot channel is a downlink pilot channel causing interference to a signal sent by the first-type pilot channel, and the second-type pilot channel comes from the first base station or a second base station adjacent to the first base station, wherein the first base station is a current serving base station.

48. The radio network controller according to claim 47, wherein if the pilot channel comprises the first-type pilot channel and/or the second-type pilot channel and both the first-type pilot channel and the second-type pilot channel are downlink pilot channels between the first base station and the user equipment, the acquiring unit is specifically configured to acquire total transmit power information of the first base station, and pilot transmit power of the first-type pilot channel and/or pilot transmit power of the second-type pilot channel; or
if the pilot channel comprises the first-type pilot channel and the second-type pilot channel, the first-type pilot channel comes from the first base station, and the second-type pilot channel comes from the second base station, the acquiring unit is specifically configured to separately acquire total transmit power information of the first base station, total transmit power information of the second base station, pilot transmit power of the first-type pilot channel, and pilot transmit power of the second-type pilot channel; or
if the pilot channel comprises the second-type pilot channel and the second-type pilot channel comes from the second base station, the acquiring unit is specifically configured to acquire total transmit power information of the second base station and pilot transmit power of the second-type pilot channel.

49. A network side device, comprising a first base station and a radio network controller, wherein
the first base station comprises a first acquiring unit, configured to acquire total transmit power information; and a first sending unit, configured to deliver the total transmit power information to user equipment, wherein the first base station is a current serving base station of the user equipment; and
the radio network controller comprises a second acquiring unit, configured to acquire pilot transmit power of a pilot channel; and a second sending unit, configured to deliver the pilot transmit power to the user equipment.

50. The network side device according to claim 49, wherein the total transmit power information comprises:
a total transmit power absolute numerical value, wherein the total transmit power absolute numerical value is an absolute numerical value of current total transmit power; or
a total transmit power nominal value and a total transmit power relative numerical value, wherein the total transmit power relative numerical value is a value of current total transmit power relative to the corresponding total transmit power nominal value; or
the total transmit power information comprises a total transmit power relative numerical value.

51. The network side device according to claim 49 or 50, wherein the pilot channel comprises a first-type pilot channel and/or a second-type pilot channel, wherein the first-type pilot channel is a downlink pilot channel between the first base station and the user equipment, the second-type pilot channel is a downlink pilot channel causing interference to a signal sent by the first-type pilot channel, and the second-type pilot channel comes from the first base station or a second base station adjacent to the first base station.

52. The base station according to claim 51, wherein if the pilot channel comprises the first-type pilot channel and/or the second-type pilot channel and both the first-type pilot channel and the second-type pilot channel are downlink pilot channels between the first base station and the user equipment, the first acquiring unit is specifically configured to acquire total transmit power information of the first base station, and the second acquiring unit is specifically configured to separately acquire pilot transmit power of the first-type pilot channel and pilot transmit power of the second-type pilot channel.

53. The base station according to claim 51, wherein if the pilot channel comprises the first-type pilot channel and the second-type pilot channel, the first-type pilot channel comes from the first base station, and the second-type pilot channel comes from the second base station, the first base station further comprises a data path establishment unit, configured to establish a data path between the first base station and the second base station, wherein the first acquiring unit is specifically configured to acquire total transmit power information of the first base station, and acquire, by using the data path, total transmit power information of the second base station, and the second acquiring unit is specifically configured to separately acquire pilot transmit power of the first-type pilot channel and pilot transmit power of the second-type pilot channel.

54. The base station according to claim 51, wherein if the pilot channel comprises the second-type pilot channel and the second-type pilot channel comes from the second base station, the first base station further comprises a data path establishment unit, configured to establish a data path between the first base station and the second base station, wherein the first acquiring unit is specifically configured to acquire total transmit power information of the second base station by using the data path, and the second acquiring unit is specifically configured to acquire pilot transmit power of the second-type pilot channel; or
the first acquiring unit is specifically configured to acquire total transmit power information of the second base station by using the radio network controller, and the second acquiring unit is specifically configured to acquire pilot transmit power of the second-type pilot channel, and the second acquiring unit is specifically configured to acquire pilot transmit power of the second-type pilot channel, wherein the total transmit power information of the second base station is reported by the second base station to the radio network controller.

55. User equipment, configured to acquire a ratio of energy per chip to power spectral density Ec/Ior of a pilot channel, and comprising:
a receiving unit, configured to receive total transmit power information, and pilot transmit power of a pilot channel that are delivered by network side; and
a calculation unit, configured to acquire the Ec/Ior of the pilot channel according to the pilot transmit power and the total transmit power information.

56. The user equipment according to claim 55, wherein the calculation unit is specifically configured to:
acquire the pilot transmit power;
acquire current total transmit power according to the total transmit power information; and
calculate a ratio of the pilot transmit power to the total transmit power, to obtain the Ec/Ior of the pilot channel.

57. The user equipment according to claim 55 or 56, wherein if the total transmit power information comprises a total transmit power absolute numerical value, the calculation unit is configured to use the total transmit power absolute numerical value as the current total transmit power; or
if the total transmit power information comprises a total transmit power nominal value and a total transmit power relative numerical value, the calculation unit is configured to use a sum of the total transmit power nominal value and the total transmit power relative numerical value as the current total transmit power; or
if the total transmit power information comprises a total transmit power relative numerical value, the receiving unit is further configured to acquire a corresponding total transmit power nominal value by using a radio network controller RNC, and the calculation unit is configured to use a sum of the total transmit power nominal value and the total transmit power relative numerical value as the current total transmit power.

58. The user equipment according to any one of claims 55 to 57, wherein the pilot channel comprises a first-type pilot channel and/or a second-type pilot channel, wherein the first-type pilot channel is a downlink pilot channel between a first base station and the user equipment, the second-type pilot channel is a downlink pilot channel causing interference to a signal sent by the first-type pilot channel, and the second-type pilot channel comes from the first base station or an adjacent base station of the first base station, wherein the first base station is a serving base station of the user equipment.
